# EUROPÄISCHE PATENTSCHRIFT

(11) **EP 4 144 495 B1**
(45) Veröffentlichungstag und Bekanntmachung des Hinweises auf die Patenterteilung: **31.01.2024**
(21) Anmeldenummer: 22202303.8
(22) Anmeldetag: 06.10.2015
(51) Int. Cl.: B26D 7/32, B26D 5/00, B60L 13/10, E01B 25/30, B65G 1/06

(54) **INDIVIDUELLER TRANSPORT VON LEBENSMITTELPORTIONEN**
INDIVIDUAL TRANSPORT OF FOOD PORTIONS
TRANSPORT INDIVIDUEL DE PORTIONS ALIMENTAIRES

(30) Priorität: 07.11.2014 DE 102014116233
(43) Veröffentlichungstag der Anmeldung: 08.03.2023
(62) Teilanmeldung aus: 15774927.6
(73) Patentinhaber: Weber Maschinenbau GmbH Breidenbach, 35236 Breidenbach (DE)
(72) Erfinder: Horst, Theodor, 35287 Amöneburg (DE)
(74) Vertreter: Manitz Finsterwald Patent- und Rechtsanwaltspartnerschaft mbB

(56) Entgegenhaltungen:
- WO-A1-2010/085670
- DE-A1- 3 711 688

## Beschreibung

Die Erfindung betrifft das Bewegen von Portionen, die jeweils wenigstens eine von einem Lebensmittelprodukt, insbesondere mittels einer Aufschneidevorrichtung, insbesondere Hochgeschwindigkeits-Slicers, abgetrennte Scheibe umfassen. Aus der DE 37 11 688 A1 ist ein System mit zumindest einer Aufschneidevorrichtung zum Aufschneiden von Lebensmittelprodukten, einer Fördervorrichtung zum Bewegen von Portionen, die jeweils wenigstens eine von einem Lebensmittelprodukt abgetrennte Scheibe umfassen, und zumindest einer Verpackungsvorrichtung.gemäß dem Oberbegriff des Anspruchs 1 bekannt.

Insbesondere bei der Produktion von Ein- oder Mehrsorten-Packungen, die eine oder mehrere Portionen aus beispielsweise Wurst- und/oder Käsescheiben enthalten, werden Fördersysteme benötigt, um die mittels eines oder mehrerer Aufschneidevorrichtungen, insbesondere sogenannter Slicer, erzeugten und Portionen oder zumindest Teilportionen bildenden Lebensmittelscheiben einer Verpackungsvorrichtung zuzuführen.

Die Förderstrecke dient in der Praxis nicht lediglich dem Transport der Portionen vom Slicer zur Verpackungsvorrichtung, sondern hat zusätzliche, von der jeweiligen Anwendung abhängige Funktionen zu erfüllen, die dem Fachmann grundsätzlich bekannt sind und von denen an dieser Stelle lediglich beispielhaft die Pufferung und die Formatsatzbildung, entsprechend den Anforderungen einer Verpackungsvorrichtung, genannt werden sollen. Unmittelbar im Anschluss an den Slicer sind außerdem Portionierungs- sowie Komplettierungsaufgaben zu erfüllen. Ferner müssen die Portionen gewogen werden.

Eine immer größer werdende Bedeutung kommt zudem einem sogenannten Mehrspurbetrieb zu, bei dem mehrere Lebensmittelprodukte gleichzeitig mittels eines Slicers aufgeschnitten werden. Das nachgeordnete Fördersystem muss zu einem derartigen Mehrspurbetrieb und vor allem dazu in der Lage sein, aus den in der jeweiligen Anzahl von Spuren erzeugten Portionen diejenigen auch als Formatsätze bezeichneten Formate zu bilden, die von der nachgeordneten Verpackungsvorrichtung gefordert werden bzw. verarbeitet werden können.

Diese und weitere Aufgaben eines Fördersystems auf dem Gebiet der Handhabung von Portionen aus mittels Slicern von insbesondere laib- oder stangenförmigen Lebensmittelprodukten abgetrennten Scheiben werden derzeit mit Förderbandsystemen zufriedenstellend gelöst. Allerdings sind Förderbandsysteme mit einem hohen mechanischen Aufwand verbunden. Problematisch insbesondere im Hinblick auf den geforderten schonenden Transport der Portionen sind außerdem z.B. die Übergänge zwischen aufeinanderfolgenden Förderbandabschnitten. Des Weiteren lassen sich mit Förderbändern naturgemäß nur gerade Förderstrecken oder aus geradlinigen Abschnitten bestehende Förderstrecken realisieren, d.h. die Flexibilität bei der Auslegung einer Förderstrecke ist bei Förderbandsystemen begrenzt. Genauso sind die Möglichkeiten der gesamten Anlage begrenzt, z.B. bezüglich der zu verarbeitenden Produkte und der Portions- und Formatsatzbildungsmöglichkeiten. Außerdem ist in Verbindung mit im Lebensmittelbereich eingesetzten Förderbandsystemen ein vergleichsweise hoher Aufwand bei der Reinigung erforderlich, um die hohen Hygienestandards einhalten zu können.

Vor diesem Hintergrund ist eine Aufgabe der Erfindung, eine Möglichkeit für den Transport von Lebensmittelportionen zu schaffen, bei der die oben erwähnten Einschränkungen nicht bestehen und die dennoch die derzeit gestellten Anforderungen bei möglichst hoher Flexibilität erfüllen kann.

Die Lösung dieser Aufgabe erfolgt durch die Merkmale des Anspruchs 1. Das erfindungsgemäße System umfasst zumindest eine Aufschneidevorrichtung, insbesondere Hochgeschwindigkeits-Slicer, zum Aufschneiden von Lebensmittelprodukten, eine Fördervorrichtung zum Bewegen von Portionen, die jeweils wenigstens eine von einem Lebensmittelprodukt abgetrennte Scheiben umfassen, und zumindest eine Verpackungsvorrichtung zum Verpacken der Portionen. Die Fördervorrichtung weist eine Mehrzahl individuell bewegbarer Transportmover zum Transport von Portionen, ein Bahn- bzw. Fördersystem für die Transportmover, in welchem die Transportmover entlang wenigstens einer vorgegebenen Bahn in einer Transportrichtung bewegbar sind, und eine Steuereinrichtung zum Steuern bzw. Regeln der Bewegung der Transportmover in dem Bahn- bzw. Fördersystem auf. Die Steuereinrichtung kann die Transportmover insbesondere auch verteilen und/oder zuordnen. Die Transportmover umfassen jeweils zumindest einen mit dem Bahn- bzw. Fördersystem zusammenwirkenden Läufer und wenigstens einen am Läufer, z.B. mittels einer Halterung, angebrachten Träger für Portionen. Die Fördervorrichtung ist zum Bewegen der Portionen von einer bzw. mehreren Aufschneidevorrichtungen zu einer bzw. mehreren Verpackungsvorrichtungen ausgebildet.

Im Rahmen der Erfindung ist der Begriff "Portion" breit zu verstehen. Eine Portion kann dementsprechend aus nur einer einzigen Scheibe bestehen. Alternativ kann eine Portion mehrere Scheiben umfassen, die in einer grundsätzlich beliebigen Relativanordnung vorliegen können, beispielsweise in einer sogenannten Stapel- oder Schindelanordnung, wie sie auf dem hier in Rede stehenden technischen Gebiet dem Fachmann bekannt sind. Bei der Portion kann es sich um eine Gesamtportion handeln, wie sie abschließend verpackt und im Handel angeboten wird. Alternativ kann die Portion eine Teilportion sein, die erst zusammen mit einer oder mehreren weiteren Teilportionen, die wiederum jeweils eine oder mehrere Scheiben umfassen können, eine Gesamtportion bildet. Die Teilportionen einer Gesamtportion können aus unterschiedlichen Produktsorten gebildet sein, so dass durch Zusammenstellen mehrerer Teilportionen eine Mehrsorten-Portion erzeugt werden kann und nach deren Verpackung somit eine Mehrsorten-Packung vorliegt. Bei den Scheiben kann es sich beispielsweise um vergleichsweise dünne Scheiben handeln, wie sie in Form von Wurst- oder Käseaufschnitt allgemein bekannt sind. Alternativ kann es sich bei den Scheiben jeweils um im Vergleich zu Aufschnitt relativ dicke Stücke wie beispielsweise Frischfleischstücke handeln.

Mit anderen Worten handelt es sich im Rahmen der Erfindung bei einer Portion um die im Hinblick auf die Transportaufgabe kleinste Einheit, die einerseits über eine bestimmte Strecke transportiert werden muss und die gegebenenfalls - je nach Anwendung - andererseits zusätzlich zu weiteren Portionen in Beziehung gesetzt werden muss, um die jeweiligen Anforderungen der Gesamtanlage, die eine oder mehrere Aufschneidevorrichtungen, insbesondere Slicer, das Bahnsystem sowie eine oder mehrere Verpackungsvorrichtungen umfasst, zu erfüllen, beispielsweise hinsichtlich der Bildung von Formaten, wie sie für die jeweils vorgesehene Verpackungsvorrichtung bereitgestellt werden müssen.

Ein Transportmover kann eine oder mehrere Portionen transportieren. Alternativ ist es auch möglich, dass mehrere, insbesondere zwei, Transportmover gemeinsam eine Portion transportieren. Die Transportmover können dabei gewisserma-ßen gemeinsam auf dem Bahnsystem als Einheit bewegt werden. Auf diese Weise können auch größere Lasten, insbesondere schwerere und/oder flächenmäßig größere Portionen, auf dem Bahnsystem bewegt werden, als mit nur einem Transportmover.

Die Anzahl der auf dem Bahnsystem befindlichen und benötigten Transportmover bzw. Träger ist variabel und betriebsabhängig. Die Regelung der benötigten Transportmover und/oder der Kopplung von Transportmovern kann in Abhängigkeit von der Anwendung bzw. dem Schneidprogramm erfolgen. Die Anzahl der Transportmover kann hierbei ermittelt, angezeigt und/oder automatisiert vorgewählt werden. Diese Regelung kann insbesondere die gesamte Anlage oder auch nur Teilabschnitte des Bahnsystems betreffen. Vorzugsweise kann die Regelung im Zusammenspiel mit den Fahrgeschwindigkeiten der Mover und/oder der Position bzw. Verfügbarkeit von Abstellgleisen, z.B. zum Parken, Reinigen und/oder Umrüsten, erfolgen.

Vorzugsweise ist zumindest ein und insbesondere jeder Träger zur unmittelbaren Aufnahme zumindest einer Portion ausgebildet und umfasst z.B. eine zumindest im Wesentlichen ebene Auflagefläche für die Portion. Auch kann der Träger ein Förderband umfassen, dessen Oberseite die Auflagefläche bildet.

Hierdurch ist es nicht erforderlich, die Transportmover mit Teilen der endgültigen Verpackung, beispielsweise einem auch als Tray bezeichneten Verpackungsunterteil, zu versehen, da die Portion unmittelbar vom Transportmover bzw. dessen Träger selbst aufgenommen werden kann. Dies hat beispielsweise den Vorteil, dass die Übergabe einer Portion an die Verpackung an einem gezielt dafür optimierten Bereich und in einer gezielt hierfür optimierten Art und Weise übergeben werden kann, beispielsweise mithilfe eines Förderbands des Trägers. Insbesondere ist es nicht erforderlich, Teile einer Verpackung im Bahnsystem zu bewegen. So ist es beispielsweise nicht nötig, bei der Produktion von Mehrsorten-Packungen die einzelnen Teilportionen nacheinander durch Umherfahren eines Verpackungsbestandteils, wie z.B. eines sogenannten Trays, einzusammeln.

Ferner kann erfindungsgemäß vorgesehen sein, dass zumindest ein und insbesondere jeder Träger während des Betriebs zum Verbleib am Transportmover oder zur lediglich vorübergehenden Trennung vom Transportmover und anschließenden Weiterverwendung oder Wiederverwertung an dem oder einem anderen Transportmover ausgebildet ist. Die Träger, von denen die Portionen aufgenommen werden, sind hierbei also auch bei eventuell vorübergehender Trennung vom jeweiligen Transportmover ein Bestandteil des Transportsystems und sind folglich keine externen Komponenten wie beispielsweise Teile einer Verpackung.

Die erfindungsgemäße Verwendung eines Bahnsystems mit einer oder mehreren Bahnen für die Transportmover bedeutet nicht zwangsläufig, dass die Transportmover ausschließlich eindimensional wie beispielsweise einzelne Wagen einer Achterbahn bewegbar sind. Als eine Bahn im Sinne der Erfindung ist insbesondere auch eine Strecke zu verstehen, auf welcher die Transportmover quer zur Transportrichtung bewegbar sind und beispielsweise auch auf eine Parallelspur wechseln können.

Ungeachtet dieser möglichen Ausgestaltung der Erfindung ist gemäß einer bevorzugten Weiterbildung vorgesehen, dass die Transportmover in dem Bahnsystem zumindest abschnittsweise ausschließlich eindimensional bewegbar sind.

Dabei ist insbesondere vorgesehen, dass die Transportmover von dem Bahnsystem zwangsgeführt sind.

Eine Führung für die Transportmover kann beispielsweise ein Schienensystem umfassen, insbesondere ein Schienenpaar, das parallel zueinander verlaufende Schienen umfasst, von denen oder zwischen denen der Transportmover geführt wird.

Der Transportmover kann auf einer Führung beispielsweise gleiten oder rollen.

Eine Führung des Transportmovers kann über dessen Läufer erfolgen. Hierzu kann der Läufer Schlitze oder Nuten aufweisen, die mit einer oder mehreren Schienen eines Führungsschienensystems in Eingriff stehen. Es ist aber nicht zwingend, dass derartige Führungsmittel der Transportmover an deren Läufern vorgesehen sind. Eine Führung des Transportmovers kann völlig unabhängig von dem Läufer erfolgen. Insbesondere kann der Läufer ausschließlich einem Antrieb des Transportmovers dienen.

Vorzugsweise ist vorgesehen, dass die Transportmover in dem Bahnsystem herausfallsicher angeordnet sind. Dies kann insbesondere durch Hintergreifen, Untergreifen und/oder Umgreifen einer Führung erfolgen, insbesondere mittels des Läufers.

Eine derartige herausfallsichere Anordnung ist insbesondere dann von Vorteil, wenn das Bahnsystem solche Bahnabschnitte umfasst, in denen die Transportmover bzw. deren Läufer seitlich oder unten angeordnet sind.

In einem Ausführungsbeispiel ist vorgesehen, dass das Bahnsystem für die Transportmover einen Antriebsabschnitt und eine mit dem Antriebsabschnitt verbundene Führung umfasst. Hierdurch können die Funktionen "Antreiben" einerseits und "Führen" andererseits in dem Bahnsystem zumindest für einige und insbesondere für alle Bahnabschnitte voneinander getrennt werden.

Der Antriebsabschnitt kann insbesondere als Stator eines Linearmotors ausgebildet sein, der mit den Läufern der Transportmover zusammenwirkt. Auf ein solches Antriebsprinzip, das eines von mehreren im Rahmen der Erfindung möglichen Antriebsprinzipien darstellt, wird nachstehend näher eingegangen.

Was den Antrieb der Transportmover in dem Bahnsystem anbetrifft, so können gemäß einer möglichen Ausgestaltung der Erfindung die Transportmover jeweils selbstfahrend bzw. selbstlaufend ausgeführt sein. Hierzu kann beispielsweise jeder Transportmover eine eigene Antriebseinheit mit sich führen, die beispielsweise einen oder mehrere Elektromotoren umfasst. Die Antriebseinheit kann beispielsweise eine oder mehrere Kugeln, Rollen, Walzen oder Räder antreiben, mittels welcher sich die Transportmover jeweils in dem Bahnsystem selbsttätig fortbewegen können.

Eine Energieversorgung der Antriebseinheiten kann beispielsweise über das Bahnsystem erfolgen. Hierdurch kann den Transportmovern beispielsweise permanent elektrische Energie zugeführt werden. Alternativ oder zusätzlich kann jeder Transportmover einen wiederaufladbaren Akku umfassen. Das Aufladen kann an einem oder mehreren bestimmten Bahnabschnitten beispielsweise bei stehendem Transportmover erfolgen, z.B. induktiv. Alternativ oder zusätzlich kann das Aufladen während des Transportprinzips bei sich bewegendem Transportmover, beispielsweise induktiv, erfolgen.

Alternativ zu einem Selbstfahr- bzw. Selbstlaufantrieb der Transportmover kann vorgesehen sein, dass der Antrieb für die Transportmover jeweils von dem Läufer und dem Bahnsystem gebildet ist, wobei insbesondere jeweils der Läufer und das Bahnsystem gemeinsam einen elektromagnetischen Antrieb für den Transportmover bilden.

Der Antrieb für die Transportmover kann jeweils als Linearmotor ausgebildet sein, insbesondere als linearer Synchronmotor oder als linearer Induktionsmotor.

Derartige Linearmotoren sind im Zusammenhang mit einer Vielzahl von Anwendungen grundsätzlich bekannt. Von Vorteil ist ein derartiges Antriebsprinzip unter anderem dann, wenn vergleichsweise geringe Lasten zu transportieren sind, wie es in dem hier in Rede stehenden Bereich des Transports von Lebensmittelportionen der Fall ist.

Ein für die Erfindung grundsätzlich verwendbares Transportsystem, auf das hiermit im Hinblick auf das Erfordernis der Ausführbarkeit der Erfindung ausdrücklich Bezug genommen wird, wird von der Firma MagneMotion Inc. mit Sitz in Devens, Massachusetts, USA, angeboten. Dieses System basiert auf einem sogenannten LSM-Antrieb, also auf einem Antrieb durch lineare Synchronmotoren, der von einem sogenannten linearen Induktionsmotor (LIM-Antrieb) zu unterscheiden ist. Im Unterschied zu einem LIM-Antrieb wird bei einem LSM-Antrieb ein Magnetfeld nicht mittels des sogenannten elektromagnetischen Wanderfeldes induziert, sondern das Magnetfeld wird durch Permanentmagnete bereitgestellt. Wenn der Läufer des Linearmotors die Permanentmagnete trägt und der Stator des Linearmotors das elektromagnetische Wanderfeld erzeugt, dann kann man sich das Antriebsprinzip eines LSM-Antriebs bildlich so vorstellen, dass der mit dem Permanentmagneten versehene Transporter von dem sich längs des Stators bewegenden Magnetfeld über die Transportstrecke gezogen wird. Ein solches Transportsystem bzw. Antriebsprinzip ist beispielsweise in WO 2003/029651 A2 und WO 2010/085670 A1 beschrieben. Auf diese Dokumente wird hiermit bezüglich der Offenbarung eines möglichen Antriebs- bzw. Funktionsprinzips für die Erfindung ausdrücklich Bezug genommen.

Das Bahnsystem bzw. die einzelnen Bahnen eines solchen Transportsystems können in eine Vielzahl aufeinanderfolgender Bahnelemente unterteilt werden, die gewissermaßen jeweils einen Einzel-Linearmotor bilden und von einer Steuereinrichtung individuell ansteuerbar sind. Wenn gleichzeitig die im Bahnsystem befindlichen Transportmover mittels der Steuereinrichtung identifizierbar sind, dann können auf diese Weise grundsätzlich beliebig viele Transportmover gleichzeitig in einem grundsätzlich beliebig komplexen Bahnsystem betrieben und dabei individuell bewegt werden.

Für die Identifizierung bzw. Lokalisierung der einzelnen Transporter im Bahnsystem verwendet die vorstehend erwähnte Firma MagneMotion Inc. eine Technik, bei der jeder Transporter mit einem Transducer versehen ist, der in den vom Bahnsystem gebildeten Stator ein Signal induziert, wodurch es der Steuereinrichtung ermöglicht wird, die exakte Position des Transporters mit einer von der Größe des Gesamtsystems abhängigen Genauigkeit von Bruchteilen eines Millimeters oder Bruchteilen eines Zentimeters zu bestimmen. Ein Vorteil dieses Systems besteht darin, dass keine externen Sensoren benötigt werden. Bei dem Steuersystem der Firma MagneMotion Inc. ist außerdem durch eine Unterteilung der Bahnen in eine Vielzahl von - gewissermaßen jeweils einen Einzel-Linearmotor darstellenden - Bahnelementen sichergestellt, dass keine Kollisionen zwischen aufeinanderfolgenden Transportern auftreten. So kann ein Transporter nur dann in das nächste Bahnelement einfahren, wenn dies von der Steuereinrichtung gestattet wird, was insbesondere dann nicht der Fall ist, wenn sich ein anderer Transporter in dem Bahnelement befindet.

Vor dem Hintergrund dieses grundsätzlich bekannten Transportsystems ist bei der Erfindung in einem möglichen Ausführungsbeispiel vorgesehen, dass das Bahnsystem als Stator des Linearmotors ausgebildet ist.

Insbesondere ist der Läufer jeweils ein Bestandteil eines linearen Synchronmotors, wobei insbesondere der Läufer zumindest einen Permanentmagneten umfasst und das Bahnsystem als Motorstator ausgebildet ist.

Insbesondere ist das Bahnsystem in eine Vielzahl von, insbesondere jeweils einen Einzel-Linearmotor darstellenden, Bahnelementen unterteilt, die von der Steuereinrichtung individuell ansteuerbar sind.

Die Transportmover sind vorzugsweise von der Steuereinrichtung identifizierbar.

Des Weiteren sind die Transportmover vorzugsweise von der Steuereinrichtung im Bahnsystem lokalisierbar.

Erfindungsgemäß wurde erkannt, dass mit einem Individualsystem mit individuell bewegbaren Transportern für die Portionen alle aktuell geforderten und auch zukünftig vorstellbaren Anforderungen an ein Transportsystem für Lebensmittelportionen in idealer Weise abgebildet werden können. Während der Stand der Technik der Vorstellung verhaftet ist, den Transport von Lebensmittelportionen mittels Förderbandsystemen bewerkstelligen zu müssen, bedeutet die Erfindung eine Abkehr von einem derartigen Gemeinschaftstransport hin zu einem "Individualverkehr", bei dem die Portionen - im durch das Bahnsystem vorgegebenen Rahmen - unabhängig voneinander bewegt werden können und insbesondere im Gesamtsystem auch individuell registriert werden können.

Erfindungsgemäß umfasst das Transportsystem eine Mehrzahl von Transportmovern, deren Gesamtanzahl von der jeweiligen Anwendung abhängig ist. Ein Aspekt der Erfindung besteht darin, nicht bloß einige wenige Portionen zu bewegen und hierfür nur eine relativ geringe Zahl von z.B. weniger als 10 Transportmovern vorzusehen. Vielmehr ist erfindungsgemäß insbesondere vorgesehen, dass das Bahnsystem mehrere Dutzende bis einige Hundert Transportmover umfasst, d.h. es kann gewissermaßen ein regelrechter "Schwarm" von Transportmovern im Bahnsystem vorhanden sein, um eine Vielzahl von Portionen zu transportieren und gegebenenfalls Zusatzfunktionen durchzuführen wie z.B. eine Pufferung, ein Verteilen und/oder ein Zuordnen von Portionen.

Ein wesentlicher Vorteil des erfindungsgemäßen Transportsystems gegenüber herkömmlichen Förderbandsystemen besteht darin, dass das Bahnsystem für die Mover keine beweglichen Teile erfordert und deshalb gegen Verschmutzungen vergleichsweise unempfindlich bzw. leicht zu reinigen ist. Das Bahnsystem kann insbesondere derart geschützt bzw. gekapselt hergestellt werden, dass selbst bei unter Hygienegesichtspunkten äußerst anspruchsvollen Bedingungen, wie sie bei der Verarbeitung von Lebensmittelprodukten und den damit verbundenen Reinigungsanforderungen herrschen, hohe Hygienestandards erfüllt und strenge Normen eingehalten werden können. Insbesondere ist es erfindungsgemäß möglich, ein IP69K-fähiges Transportsystem mit vertretbarem Aufwand zu realisieren.

Das erfindungsgemäße Transportprinzip kann auf unterschiedliche Art und Weise konkret technisch umgesetzt und im Hinblick auf die jeweiligen konkreten Anforderungen ausgestaltet werden.

Erfindungsgemäß können somit Portionen beispielsweise durch den Sortier- und/oder Pufferbereich gefördert werden, ohne dass eine Portionsübergabe erforderlich ist. Im Gegensatz dazu haben bisherige Systeme viele Übergänge zwischen den einzelnen Bändern, wodurch die Portionsqualität negativ beeinflusst wird. Erfindungsgemäß werden die Portionsübergaben vermieden bzw. zumindest minimiert.

Auch benötigen herkömmliche Systeme mehrere Lichtschranken, die immer wieder die Position der Portionen überprüfen. Eine entsprechende Sensorik, welche die Lage der Portionen auf der Transportlinie bestimmt, können erfindungsgemäß eingespart werden.

Erfindungsgemäß ergibt sich ein hochflexibles Fördersystem mit mehreren Transportmovern, die individuell in alle Richtungen auf dem Bahnsystem bewegt werden können. Die darauf befindlichen Portionen können an beliebigen Orten geparkt, sortiert, komplettiert und/oder ausgerichtet werden. Erfindungsgemäß kann eine Aufschneidevorrichtung oder auch mehrere Aufschneidevorrichtungen vorgesehen sein. Mit dieser können Scheiben, Teilportionen bzw. Portionen generiert werden. Über das Bahnsystem und die Transportmover können die Portionen, gegebenenfalls über eine Vorrichtung zur Vervollständigung der Portionen und/oder einen Puffer, zu einer Verpackungsvorrichtung bzw. zu mehreren Verpackungsvorrichtungen, welche beliebig ausgestaltet sein kann, transportiert werden. Die Taktung der Transportmover im Bahnsystem kann insbesondere individuell sein. So können die einzelnen Transportmover einen entsprechenden Datensatz bzw. eine entsprechende Kennung tragen, welche z.B. auch der transportierten Portion zugeordnet sein kann, wodurch diese jederzeit identifizierbar sind. Anhand der Identifizierung kann eine Bahn- bzw. Bewegungssteuerung erfolgen, insbesondere können die Abstände zwischen den Transportmovern, die Reihenfolge, der Vorrang, der Weg und/oder die Geschwindigkeit der Transportmover eingestellt werden.

Im Gegensatz zu herkömmlichen Förderbändern können sich die Förderwege der Transportmover auch kreuzen. Ferner kann eine dynamische Umschaltung bzw. variable, individuelle Steuerung bzw. Beeinflussung einzelner Portionen auf der gesamten Förderstrecke erfolgen. So können beispielsweise einzelne Transportmover, und somit auch Portionen, schneller durchgeschleust werden als andere. Ferner können Teilmengen aus einem Hauptstrom abgezweigt werden. Auch können die Geschwindigkeiten und/oder die Bahnen der einzelnen Transportmover jederzeit individuell angepasst werden. Somit kann eine flexible Einzelportionssteuerung gewährleistet werden.

Die Erfindung betrifft außerdem ein Verfahren zum Bewegen von Portionen, die jeweils wenigstens eine von einem Lebensmittelprodukt mittels zumindest einer Aufschneidevorrichtung, insbesondere Hochgeschwindigkeits-Slicer, abgetrennte Scheibe umfassen, bei dem die Portionen mittels einer Mehrzahl individuell bewegbarer Transportmover bewegt werden, die mittels einer Steuereinrichtung in einem Bahnsystem entlang wenigstens einer vorgegebenen Bahn zu zumindest einer Verpackungsvorrichtung bewegt und dort verpackt werden. Die Transportmover umfassen jeweils zumindest einen mit dem Bahnsystem zusammenwirkenden Läufer und wenigstens einen am Läufer angebrachten Träger für Portionen.

Die erfindungsgemäße Vorrichtung ist insbesondere zur Durchführung eines Verfahrens der hier beschriebenen Art ausgebildet. Das erfindungsgemäße Verfahren wird insbesondere mit einer Vorrichtung der hier beschriebenen Art durchgeführt.

Mögliche Weiterbildungen der Erfindung sind auch im nachfolgenden Teil der Beschreibung, in der Figurenbeschreibung, in den Zeichnungen sowie in den Ansprüchen angegeben.

Gemäß einer Ausführungsform sind genau eine Aufschneidevorrichtung und mehrere Verpackungsvorrichtungen vorgesehen. Die Leistung der Aufschneidevorrichtung kann hierbei bestmöglich ausgenutzt werden. Mehrere, vorzugsweise bis zu fünf, Verpackungsvorrichtungen, welche insbesondere parallel zueinander angeordnet sind, können durch eine einzige Aufschneidevorrichtung mit Portionen versorgt werden. Bei herkömmlichen Systemen mit mehreren Aufschneidevorrichtungen können die Aufschneidevorrichtungen beispielsweise zum Teil nur mit einer erheblich reduzierten Leistung betrieben werden, da diese an den Takt einer Verpackungsvorrichtung angepasst werden müssen. Insbesondere kann es, falls nur eine einzige Verpackungsvorrichtung vorgesehen ist, bei der eine Störung vorliegt, zu einem Stocken im Aufschneidebetrieb kommen. Zulässige Verweilzeiten der Produkte können hierbei überschritten werden, was hinsichtlich der Hygiene aufgrund der Erwärmung der Lebensmittelprodukte nachteilig ist.

Erfindungsgemäß können selbst bei einem System mit einer einzigen Aufschneidevorrichtung Mehrsorten-Portionen erzeugt werden, welche im Folgenden auch Mischportionen genannt werden. Der Begriff "Mehrsorten-Portion" umfasst sowohl eine Portion aus verschiedenen Produkten, also z.B. aus unterschiedlichen Salamisorten, als auch eine Portion mit einer bestimmten Ablageform bzw. Teilportionsform, bei der die Teilportionen zusammen in einer sogenannten Mehrsorten-Packung kombiniert werden können. Um mit einer einzigen Aufschneidevorrichtung Mehrsorten-Portionen erzeugen zu können, sind insbesondere Puffer vorgesehen, worauf nachstehend näher eingegangen wird.

Nach einer weiteren Ausführungsform ist die maximale Leistung der Aufschneidevorrichtung größer als die Leistung einer Verpackungsvorrichtung, wobei die Leistung der Anzahl von Portionen entspricht, die pro Zeiteinheit erzeugt oder verpackt werden können. Insbesondere kann bei genau einer Aufschneidevorrichtung bzw. bei einem System, bei dem weniger Aufschneidevorrichtungen als Verpackungsvorrichtungen vorhanden sind, die Maximalleistung der Aufschneidevorrichtung besser ausgenutzt werden. Die Aufschneidevorrichtung kann demnach insbesondere bei voller Leistung laufen und mehrere, weniger leistungsfähige Verpackungsvorrichtungen mit Portionen versorgen.

Falls hingegen mehr Aufschneidevorrichtungen als Verpackungsvorrichtungen vorhanden sind, kann die Leistung einer Aufschneidevorrichtung insbesondere kleiner sein als die Leistung einer Verpackungsvorrichtung.

Gemäß einer weiteren Ausführungsform sind mehrere Aufschneidevorrichtungen und mehrere Verpackungsvorrichtungen vorgesehen. Diese können durch das Bahnsystem flexibel miteinander verbunden werden. Auch ist es möglich, einzelne Aufschneidevorrichtungen bzw. Verpackungsvorrichtungen einzubinden bzw. zu umgehen. Dies kann insbesondere produkt-, portions-, format-, betriebs- und/oder leistungsabhängig erfolgen.

Insbesondere ist ein Wechsel zwischen den Verpackungsvorrichtungen auf flexible Weise möglich. Dadurch werden insbesondere die Reinigung, das Einrichten und/oder das Einstellen erleichtert. Insbesondere kann eine optimale Auslastung der jeweiligen Verpackungsvorrichtung sowie ein schnelles Wechseln zwischen einzelnen Verpackungsvorrichtungen ermöglicht werden. Dies ist insbesondere vorteilhaft, wenn beispielsweise gleiche Produktsorten in unterschiedlichen Verpackungen verpackt werden. Dabei kann eine spezielle Tiefziehform bzw. -folie jeweils auf einer Verpackungsvorrichtung eingerichtet bleiben.

Gemäß einer weiteren Ausführungsform unterscheiden sich zumindest zwei Verpackungsvorrichtungen voneinander und sind insbesondere als Tiefzieh-Verpacker oder Tray-Verpacker ausgebildet. Die Verpackungsvorrichtungen können somit unterschiedlicher Art sein und beispielsweise parallel zueinander angeordnet sein.

Ein Wechsel zwischen einem Tray- und einem Tiefzieh-Verpacker kann insbesondere vorteilhaft sein, um Stillstände der Aufschneidevorrichtung zu vermeiden und die Leistung der Aufschneidevorrichtung bestmöglich auszunutzen. Insbesondere kann durch eine parallele Anordnung zumindest eines Tray-Verpackers und zumindest eines Tiefzieh-Verpackers die Möglichkeit bestehen, Überkapazitäten an Portionen auf der Abgabeseite der Anlage in einen Tray-Verpacker abzufahren. Dies kann insbesondere auch zum Überbrücken bei Umrüstpausen an anderen Verpackungsvorrichtungen hilfreich sein. Das erfindungsgemäße System ermöglicht es in wirtschaftlicher Weise, abwechselnd und flexibel mehrere Verpackungsvorrichtungen mit Portionen zu versorgen. Dies wird insbesondere durch ein schnelles Umschalten und ein räumliches Verfahren der Portionen ermöglicht. Hierbei können vorzugsweise quer verlaufende Bahnabschnitte vorgesehen sein, welche durch die Positionierung der Verpackungsvorrichtungen bedingt sind. Durch das erfindungsgemäße System kann, insbesondere zusammen mit einer entsprechenden zur Positionsbestimmung fähigen Steuerung, auf wirtschaftliche Weise ein wechselseitiges Versorgen unterschiedlicher Verpackungsvorrichtungen realisiert werden.

Nach einer weiteren Ausführungsform umfasst das Bahnsystem für jede Verpackungsvorrichtung einen zur Aufnahme zumindest eines Transportmovers bzw. Trägers ausgebildeten Puffer, wobei insbesondere der Puffer wenigstens einen Bahnabschnitt oder mehrere parallele Bahnabschnitte des Bahnsystems umfasst. Zur Erzeugung von Mehrsorten-Portionen können somit insbesondere in den Puffern zwischengespeicherte Portionen herangezogen werden.

Eine Pufferung von Portionen ist auf dem hier in Rede stehenden Gebiet des Aufschneidens von Lebensmittelprodukten insbesondere auch dann vorteilhaft, wenn - wie in der Praxis häufig der Fall - pro Zeiteinheit mittels einer oder mehrerer Aufschneidevorrichtungen mehr Portionen erzeugt werden, als am Ende der Anlage insbesondere mittels einer oder mehrerer Verpackungsvorrichtungen abgeführt werden.

Zur Erzeugung von Mehrsorten-Portionen kann der Abflussbedarf an Portionen, die vom Bahnsystem zur Verpackungsvorrichtung befördert werden, eingangsseitig und für den entsprechend angepassten Aufschneidebetrieb so erfasst und berücksichtigt werden, dass der Abfluss mit der Bildung von Mehrsorten-Portionen im Einklang steht. Es wird somit die Zuführmenge an Produkten zur Aufschneidevorrichtung gesteuert und die Portionen werden auf einen Puffer bewegt. Anschließend erfolgt der Zugriff auf den Puffer und ein entsprechendes Kombinieren der Pufferinhalte, d.h. eine Mehrsorten-Packung kann aus einem Portionsbestand im Puffer gebildet werden. Transportmover mit Portionen oder Teilportionen unterschiedlicher Sorte können somit in eine gewünschte Reihenfolge gebracht werden. Dies ist insbesondere dadurch möglich, dass die Steuerung die Produktdaten sowie die aktuelle Position der einzelnen Transportmover kennt und die Transportmover entsprechend steuert. Diese können dann auf der Abgabeseite des Bahnsystems übergabefertig und in der richtigen Reihenfolge eintreffen.

Alternativ umfasst das Bahnsystem zumindest für eine Verpackungsvorrichtung einen zur Aufnahme zumindest eines Transportmovers bzw. Trägers ausgebildeten Puffer und für zumindest eine Verpackungsvorrichtung keinen Puffer, wobei insbesondere der Puffer wenigstens einen Bahnabschnitt oder mehrere parallele Bahnabschnitte des Bahnsystems umfasst.

Insbesondere kann nur eine Teilmenge von Portionen, z.B. von gleichartigen Teilportionen, im Puffer zwischengespeichert werden. Dies ist beispielsweise bei lediglich einer bzw. zwei Aufschneidevorrichtungen denkbar. Die gepufferten Teilportionen können anschließend jeweils passend zu den aktuell aufgeschnittenen weiteren Teilportionen aus dem Puffer abgerufen werden und mit diesen zu einer Mehrsorten-Portion kombiniert werden. Denkbar wäre es beispielsweise, mittels einer Aufschneidevorrichtung zunächst 60 Portionen A, z.B. Sommersalami, und - mittels derselben oder einer anderen Aufschneidevorrichtung - 60 Portionen B, z.B. Pfeffersalami, vorzuproduzieren und in Puffern zwischenzuspeichern. Während anschließend ergänzend 60 Portionen C, z.B. Schinken, aufgeschnitten werden, können aus den Puffern jeweils die Portionen A und B abgerufen und auf der Abgabeseite des Bahnsystems hinzugesteuert werden.

Insbesondere kann das lagerfähigste Produkt zuerst aufgeschnitten und gepuffert werden. Ferner kann z.B. auch die Reihenfolge des Aufschneideprozesses beachtet werden, so dass auf eine Reinigung nach jedem Produktwechsel verzichtet werden kann. Insbesondere ist die beschriebene Bildung von Mehrsorten bei Produktsorten vorteilhaft, die möglichst keine Zwischenreinigung und keinen Umbauaufwand an der Aufschneidevorrichtung erfordern. Ferner sollte die Qualität der Produkte durch die Zwischenlagerung auf dem Puffer nicht leiden. Zudem kann aus den unterschiedlichen Produkten eine möglichst gleiche Portionsanzahl erzeugt werden, um entstehende Reste zu vermeiden.

Das Bahnsystem ermöglicht somit insbesondere die Verarbeitung kleiner Chargen und/oder häufig wechselnder Produkte. Auch kann eine große Variantenvielfalt mit Mehrsorten-Packungen erreicht werden. Bei herkömmlichen Fördersystemen mit den bekannten, im Durchlauf linienförmigen Anlagenkonstellationen wäre dieser Betriebsablauf wirtschaftlich nur schwer umsetzbar.

Gemäß einer weiteren Ausführungsform steuert die Steuereinrichtung den Aufschneidebetrieb und die Transportmover derart, dass mit zumindest einer Verpackungsvorrichtung einheitliche Portionen und mit zumindest einer Verpackungsvorrichtung Mischportionen aus einer Kombination von Teilportionen, insbesondere unterschiedlicher Sorte und/oder unterschiedlicher Form, verpackt werden. Vorzugsweise werden die Transportmover zur Erzeugung der Mischportionen vor dem Erreichen einer Verpackungsvorrichtung in einer vorgegebenen Reihenfolge gruppiert. Auf diese Weise können die Teilportionen in einer gewünschten Anordnung in einer Verpackung platziert werden.

Insbesondere ist hierbei ein dynamisches Umschalten möglich, so dass z.B. die Belieferung der jeweiligen Verpackungsvorrichtung durch die Transportmover verändert werden kann. Vorzugsweise können die Transportmover nach einem vorgebbaren Kriterium, z.B. dem gewünschten Portionsgewicht, zu einer bestimmten Verpackungsvorrichtung verfahren werden.

Die Erstellung einer Mehrsorten-Packung kann dabei direkt durch eine entsprechende Portionsübergabe an die Verpackungsvorrichtung erfolgen oder durch einen vorgeschalteten Mehrsortenbilder. Bei letzterem werden zunächst Mischportionen erstellt, ehe diese an die Verpackungsvorrichtung abgegeben werden.

Nach einer weiteren Ausführungsform wird zumindest ein Transportmover mit einer Teilportion aus einem Hauptstrom, vorzugsweise aus einem Bahnabschnitt, welcher zu einer ersten Verpackungsvorrichtung führt, abgezweigt. Das Abzweigen erfolgt insbesondere zur Erzeugung einer Mischportion mit oder vor einer weiteren Verpackungsvorrichtung.

Insbesondere können dadurch, zumindest vorübergehend, nebenbei Mischportionen erzeugt werden. So können Teilmengen von Portionen aus einem Haupt-Produktstrom in einen Neben-Produktstrom ausgeschleust werden. Die Teilmengen können dann jeweils eine Teilportion einer Mehrsorten-Portion bilden. Auf diese Weise ermöglicht das erfindungsgemäße System sowohl das Bilden von Monosorten-Packungen, also Packungen, welche lediglich eine Lebensmittelsorte umfassen, als auch das Erstellen von Mehrsorten-Packungen, welche eine Mischung aus dem eingangsseitigen Produktstrom aufweisen. Der Haupt-Produktstrom kann dabei insbesondere zu Verpackungsvorrichtungen für Monosorten gefördert bzw. von mindestens einer zugeordneten Verpackungsvorrichtung je Produktsorte verarbeitet werden. Vorzugsweise bildet der Haupt-Produktstrom ein größeres Durchsatzvolumen als der Neben-Produktstrom. Für Mehrsorten-Packungen kann somit z.B. eine Verpackungsvorrichtung mit einer vergleichsweise geringen Leistung eingesetzt werden.

Auf diese Weise können einerseits die Leistung einer Aufschneidevorrichtung voll ausgeschöpft sowie ein möglichst kontinuierlicher Aufschneidebetrieb gewährleistet werden. Andererseits kann zur Bildung von Mehrsorten-Packungen stets die benötigte Portionszahl zur Verfügung stehen. Dadurch, dass Mischportionen abgabeseitig mithilfe der flexibel steuerbaren Transportmover erzeugt werden, besteht keine bzw. nur eine geringe Abhängigkeit vom Aufschneidevorgang. Insbesondere besteht auch keine Abhängigkeit von der Produktgröße. So spielt es z.B. keine Rolle, wenn einzelne Produktsorten, insbesondere Salami, kürzer sind als andere, insbesondere Schinkenwurst. Die Bildung von Produktresten ist folglich unkritisch und die Beladezeiten bzw. Beladetakte an einzelnen Aufschneidevorrichtungen können insbesondere unterschiedlich sein, ohne dass dies auf der Abführseite zu größeren Taktänderungen führt.

Vorzugsweise kann sich der Takt der Verpackungsvorrichtung im anteilig deutlich größeren Haupt-Produktstrom etwas verlangsamen bzw. es kann die Schneidleistung entsprechend um die Anzahl der zusätzlichen Portionen erhöht werden, um die als Neben-Produktstrom abgezweigten Portionen auszugleichen.

Dadurch, dass nur die tatsächlich für Portionen benötigten Transportmover in dem Bahnsystem bewegt werden, ergibt sich eine bestmögliche Hygiene. Bei herkömmlichen Anlagen muss eine Bahnanlage nämlich bereits nach kurzem Betrieb mit einem Neben-Produktstrom gereinigt werden, was insbesondere zu einer Unterbrechung im Produktionsablauf führt.

Insbesondere können die Transportmover eine Portion tragen und zusätzlich jeweils einen Datensatz zur Portion aufweisen, welcher insbesondere durch die Steuereinrichtung nachverfolgt werden kann. Dadurch wird ein Sortieren der Teilportionen in einem abgezweigten Neben-Produktstrom ermöglicht, z.B. durch ein Überholen von Transportmovern. Auf diese Weise kann beispielsweise eine untergewichtige Teilportion einer ersten Sorte mit einer übergewichtigen Teilportion einer zweiten Sorte kombiniert werden. Eine gewünschte Mehrsorten-Portion kann damit nach einer Zusammenführung der unterschiedlichen Teilportionen ein vorgegebenes Sollgewicht erreichen.

Nach einer weiteren Ausführungsform kann eine Hygieneschleuse vorgesehen sein, bei der ausgeschleuste Teilmengen von Portionen mithilfe der Transportmover auf dem Bahnsystem beispielsweise in einen benachbarten Aufschneide- und/oder Verpackungsraum gelangen. Hierbei kann insbesondere mindestens eine Lüftungsvorrichtung, z.B. mit oder ohne Luftbehandlung und/oder Entkeimung, im Bereich des Übergangs vorgesehen sein.

Alternativ oder zusätzlich kann auch eine Reinigung, insbesondere Desinfektion, der Transportmover vor Durchtritt oder Rückkehr aus dem benachbarten Aufschneide- und/oder Verpackungsraum vorgesehen sein. Vorzugsweise können hierbei einzelne Aufschneide- und/oder Verpackungsräume parallel, insbesondere unabhängig, nebeneinander betrieben werden. Auf diese Weise kann einer Keimverschleppung vorgebeugt werden.

Insbesondere können die Transportmover auf dem Bahnsystem eine Portion an einer Aufschneidevorrichtung aufnehmen und dann den jeweils abgegrenzten Raum verlassen. Ein sich anschließender Puffer- und/oder Sortierbereich des Bahnsystems kann wiederum eine Zone bilden. Ein Durchtritt bzw. eine Rückkehr aus dieser Zone zum Aufschneideraum ist für die Transportmover nach Abgabe der jeweiligen Portionen vorzugsweise nur über eine Schleuse möglich. Die Transportmover können insbesondere erst wieder diese Zone verlassen, wenn diese gereinigt wurden.

Gemäß einer weiteren Ausführungsform stammen alle Teilportionen jeweils aus einem, insbesondere unterschiedlichen, Puffer. Die Portionen können demnach zwischengelagert und je nach Bedarf zu einer Mischportion zusammengestellt werden.

Nach einer alternativen Ausführungsform stammt zumindest eine Teilportion aus einem Puffer und zumindest eine Teilportion nicht aus einem Puffer, wobei letztere insbesondere auf direktem Weg von der Aufschneidevorrichtung zur Verpackungsvorrichtung gefördert wird. Zur Erstellung einer Mischportion kann somit eine Teilportion aus einem Puffer stammen und eine andere direkt, d.h. ohne gepuffert zu werden, von der Aufschneidevorrichtung zur Verpackungsvorrichtung gefördert werden. Ein derartiges Erstellen von Mischportionen ist mit den erfindungsgemäßen Transportmovern auf einfache Weise zu realisieren. Bei herkömmlichen Bandfördersystemen wäre dies mit einem erheblichen konstruktiven Aufwand verbunden.

Gemäß einer weiteren Ausführungsform steuert die Steuereinrichtung die Transportmover derart, dass diese abhängig von einem Kriterium zumindest vorübergehend nicht direkt, insbesondere überhaupt nicht, zu einer Aufschneidevorrichtung und/oder einer Verpackungsvorrichtung bewegt werden, wobei das Kriterium von der Leistung und/oder Art der Aufschneidevorrichtung bzw. Verpackungsvorrichtung, vom Produkt, von der Portion, von einem durch mehrere angeordnete Portionen gebildeten Format und/oder von einem vorgebbaren Betriebszustand abhängig ist.

Wird eine Aufschneidevorrichtung bzw. eine Verpackungsvorrichtung nicht direkt angefahren, sondern umfahren, so kann dieser Umfahrungsweg genutzt werden, um die Transportmover beispielsweise zu reinigen. Die anderen Bestandteile des Systems können hingegen weiter produzieren.

Falls eine Aufschneidevorrichtung bzw. eine Verpackungsvorrichtung zumindest vorübergehend nicht von den Transportmovern angefahren und ein entsprechender Bahnabschnitt nicht genutzt wird, können die Aufschneidevorrichtung, die Verpackungsvorrichtung und/oder entsprechende Abschnitte gereinigt, gewartet und/oder repariert werden. Dies wird insbesondere dadurch gewährleistet, dass das Bahnsystem mit den einzelnen Transportmovern geschwindigkeitsvariabel arbeiten kann. Einzelne Transportmover bzw. Teilmengen von Transportmovern mit Portionen können somit individuell beschleunigt oder gebremst werden. Hierbei können z.B. andere Bahnabschnitte benutzt werden. Auf diese Weise können auch Beladepausen an einzelnen Aufschneidevorrichtungen überbrückt werden, gegebenenfalls auch durch ein Vorproduzieren von Portionen oder eine Leistungserhöhung an anderen Aufschneidevorrichtungen. Somit kann, im Wesentlichen unabhängig von der Leistung einer einzelnen Aufschneidevorrichtung bzw. einer einzelnen Verpackungsvorrichtung, ein kontinuierlicher Produktstrom gewährleistet werden.

Gemäß einer weiteren Ausführungsform sind mehrere Aufschneidevorrichtungen und genau eine Verpackungsvorrichtung vorgesehen. Insbesondere kann die Leistung der Aufschneidevorrichtung geringer sein als die Leistung einer Verpackungsvorrichtung, wobei die Leistung der Anzahl von Portionen entspricht, die pro Zeiteinheit erzeugt oder verpackt werden können.

Auf diese Weise kann eine einzelne Verpackungsvorrichtung mit Portionen aus unterschiedlichen Aufschneidevorrichtungen beliefert werden. Dies ist z.B. bei der Erstellung von Mischportionen vorteilhaft. Insbesondere können die Transportmover bzw. die darauf befindlichen Portionen auf dem Weg zur Verpackungsvorrichtung gepuffert werden. Auch ist es möglich, zumindest einige Transportmover zu puffern, während andere Transportmover auf direktem Weg von einer Aufschneidevorrichtung zur Verpackungsvorrichtung gefördert werden.

Nach einer weiteren Ausführungsform steuert die Steuereinrichtung die Transportmover derart, dass diese abhängig von einem Kriterium zumindest vorübergehend nicht direkt, insbesondere überhaupt nicht, zu einer Aufschneidevorrichtung bewegt werden, wobei insbesondere das Kriterium von der Leistung und/oder der Art der Aufschneidevorrichtung bzw. der Verpackungsvorrichtung, vom Produkt, von der Portion, von einem durch mehrere angeordnete Portionen gebildeten Format und/oder von einem vorgebbaren Betriebszustand abhängt. Einzelne Aufschneidevorrichtungen können somit umfahren werden, um beispielsweise gereinigt oder gewartet werden zu können. Auch kann eine Aufschneidevorrichtung nicht von einem Transportmover angefahren werden, wenn die Aufschneidevorrichtung beispielsweise mit einem neuen Produkt beladen und das Produkt für den Aufschneidevorgang vorbereitet wird, z.B. durch ein Entfernen des Anfangsstücks.

Gemäß einer weiteren Ausführungsform sind genau eine Aufschneidevorrichtung und genau eine Verpackungsvorrichtung vorgesehen. So kann das erfindungsgemäße Bahnsystem auch bei Kleinanlagen verwendet werden. Auch hierbei ist eine flexible Zusammensetzung von Portionen möglich.

Nach einer Ausführungsform umfasst das Bahnsystem eine Verteilungsweiche, welche eine von der Aufschneidevorrichtung kommende Spur in mehrere Funktionsspuren aufteilt. So teilt die Verteilungsweiche insbesondere einen einspurigen Bahnabschnitt, welcher von der Aufschneidevorrichtung wegführt, in zumindest zwei Bahnabschnitte auf, welche als Funktionsspuren ausgebildet sind. Die Funktionsspuren können eine beliebige Funktion erfüllen und beispielsweise als Puffer dienen. So können Teilportionen zwischengespeichert werden, um insbesondere Mischportionen zu erzeugen, obwohl nur eine einzige Aufschneidevorrichtung sowie eine einzige Verpackungsvorrichtung vorliegen.

Gemäß einer weiteren Ausführungsform umfasst das Bahnsystem eine Verbindungsweiche, welche mehrere Funktionsspuren auf eine einzige zur Verpackungsvorrichtung führende Spur zusammenführt. Die Transportmover können somit, obwohl sie aus unterschiedlichen Funktionsspuren stammen, wieder auf eine gemeinsame Spur zusammengeführt und einer gemeinsamen Verpackungsvorrichtung zugeführt werden. Das Bahnsystem ermöglicht auf einfache Weise sowohl eine Aufteilung in mehrere Spuren als auch eine Zusammenführung mehrerer Spuren.

Nach einer weiteren Ausführungsform umfasst jede Funktionsspur einen zur Aufnahme zumindest eines Transportmovers bzw. Trägers ausgebildeten Puffer oder ist selbst als Puffer ausgebildet. Ein Puffer kann hierbei z.B. einen oder mehrere parallele Bahnabschnitte umfassen. Zur Erzeugung einer Mischportion können dabei sämtliche Teilportionen aus den Puffern stammen.

Alternativ umfasst zumindest eine Funktionsspur einen zur Aufnahme zumindest eines Transportmovers bzw. Trägers ausgebildeten Puffer oder die Funktionsspur ist selbst als Puffer ausgebildet, wobei zumindest eine Funktionsspur keinen Puffer umfasst und nicht als Puffer ausgebildet ist. Zur Erzeugung einer Mischportion kann dabei eine Teilportion direkt von der Aufschneidevorrichtung zur Verpackungsvorrichtung befördert werden, während die restlichen Teilportionen aus den jeweiligen Puffern stammen können.

Nach einer weiteren Ausführungsform sind mehrere Funktionsspuren zum Transport, zur Verarbeitung, zum Kombinieren und/oder zum Puffern von Portionen oder Teilportionen unterschiedlicher Sorte ausgebildet. Auch können Funktionsspuren beispielsweise dazu dienen, die Transportmover zu reinigen. Die Funktionsspuren sind somit vielfältig einsetzbar.

Gemäß einer weiteren Ausführungsform umfasst das Bahnsystem zumindest eine Ausweichstrecke, welche einen Bahnabschnitt, welcher zu einer Aufschneidevorrichtung und/oder einer Verpackungsvorrichtung führt, überbrückt. Auf diese Weise kann eine Aufschneidevorrichtung und/oder eine Verpackungsvorrichtung umfahren werden. Dies ist insbesondere dann vorteilhaft, wenn eine entsprechende Aufschneidevorrichtung bzw. Verpackungsvorrichtung vorübergehend nicht in Betrieb genommen ist, beispielsweise zu Reparatur-, Wartungs- und/oder Reinigungszwecken. Auch können die Aufschneidevorrichtung bzw. die Verpackungsvorrichtung umfahren werden, wenn dies betriebsbedingt erforderlich ist, z.B. wenn ein neues Produkt in die Aufschneidevorrichtung eingelegt und das Anfangsstück entfernt wird. Wenn mehrere Aufschneidevorrichtungen bzw. mehrere Verpackungsvorrichtungen vorgesehen sind, können stets weitere Portionen abgetrennt und verpackt werden, während einzelne Aufschneidevorrichtungen bzw. Verpackungsvorrichtungen zumindest vorübergehend umfahren werden. Dadurch wird z.B. selbst bei Wartungsarbeiten ein kontinuierlicher Portionsstrom ermöglicht.

Nach einer weiteren Ausführungsform umfasst das Bahnsystem zumindest eine Rücktransportstrecke, welche von einem Bahnabschnitt, welcher von einer Aufschneidevorrichtung zu einer Verpackungsvorrichtung führt, abzweigt und stromaufwärts wieder in den Bahnabschnitt mündet. Es ist folglich insbesondere eine Art Schleife vorgesehen, wodurch derselbe Bahnabschnitt mehrmals durchfahren werden kann. Insbesondere ist die Rücktransportstrecke als Nebengleis ausgebildet, welches beispielsweise als Rückweg für einen Transportmover entgegen einer Hauptförderstrecke dient.

Gemäß einer weiteren Ausführungsform ist die Rücktransportstrecke dazu ausgebildet ist, einen Transportmover erneut der Aufschneidevorrichtung oder einer anderen Einheit des Bahnsystems zuzuführen. Auf diese Weise können Portionen überlappt und/oder versetzt auf den Transportmover aufgelegt werden. Ein Durchlauf wird hierbei wiederholt.

Die Rücktransportstrecke kann alternativ oder zusätzlich auch dazu ausgebildet sein, einen Transportmover zum teilweisen Abdecken des Bahnsystems auf den Bahnabschnitt einzuschleusen. Dies dient insbesondere dem Schutz des Schienensystems in besonders verschmutzungsgefährdeten Bereichen, z.B. unterhalb eines Einlegers. Dazu kann der auch als Abdeckmover bezeichnete Transportmover zwischen zwei Portionen tragenden Transportmovern zumindest abschnittsweise mitfahren, so dass die Schienen in den verschmutzungsgefährdeten Bereichen durch den Abdeckmover überdeckt sind. Der Abdeckmover kann auch so lange unter einem Einlegebereich warten, bis der nächste Transportmover zur Aufnahme einer Portion eintrifft. Als Abdeckmover kann ein normaler Transportmover ohne Portion verwendet werden. Alternativ kann der Abdeckmover derart gestaltet sein, dass zumindest auf einer Seite eine Überlappung mit einem nachfolgenden Träger erreicht wird.

Auch ist es denkbar, dass die Rücktransportstrecke dazu ausgebildet ist, einen Transportmover mit Schneidresten oder fehlerhaften, insbesondere unvollständigen oder falsch positionierten, Portionen aus dem Bahnabschnitt auszuschleusen. Schneidgutreste können auf diese Weise abgeholt bzw. abgeführt werden. Dazu kann ein spezieller Abfalltransportmover vorgsehen sein, welcher abschnitts- bzw. zeitweise im Hauptstrom mitfährt, so dass er nach einer Aufnahme der Schneidreste beim Rücktransport auf der Rücktransportstrecke entladen werden kann, z.B. indem die Schneidreste abgekämmt oder abgeblasen werden. Alternativ können auch unvollständige oder nicht richtig positionierte Portionen auf der Rücktransportstrecke von Hand, halbautomatisch oder vollautomatisch korrigiert werden. Sind die Portionen korrigiert, können die Transportmover wieder in den Hauptstrom eingeschleust werden.

Ferner kann die Rücktransportstrecke auch als Pufferstrecke und/oder Überholstrecke dienen, z.B. für eine Gewichtssortierung, eine Klassifizierung von Einzelportionen und/oder eine Vor-Klassifizierung von Einzelportionen für zu erstellende Gesamtportionen. Insbesondere kann auf der Rücktransportstrecke die Reihenfolge der Transportmover vor einem Abgabepunkt, z.B. einem Roboter, beispielsweise einem so genannten "Picker", oder Einleger einer Verpackungsvorrichtung, festgelegt werden. Auch ermöglicht die Rücktransportstrecke insbesondere eine erneute Greifmöglichkeit für einen Picker einer Robotereinheit bei einer zusätzlichen Vorbeifahrt auf dem Haupt- bzw. Nebengleis.

Nach einer weiteren Ausführungsform ist zur Übergabe von Portionen von der Fördervorrichtung zur Verpackungsvorrichtung eine Robotereinrichtung, vorzugsweise mit einem Picker, vorgesehen, wobei insbesondere für jede Verpackungsvorrichtung eine Robotereinrichtung vorgesehen ist. Zur Übergabe der Portionen an eine Verpackungsvorrichtung bzw. an mehrere Verpackungsvorrichtungen können beispielsweise drei Robotereinrichtungen vorgesehen sein, welche die Portionen in Verpackungen einlegen. Dazu kann zumindest eine Teilstrecke des Bahnsystems im Einlegebereich parallel zu einem Übergabebereich einer Verpackungsvorrichtung und möglichst dicht neben dieser angeordnet sein, um die Reichweite und den Arbeitsbereich der Robotereinrichtung, insbesondere des Pickers, optimal zu nutzen.

Gemäß einer weiteren Ausführungsform kann das erfindungsgemäße Bahnsystem in ein herkömmliches Bandfördersystem integriert sein. Insbesondere können z.B. Übergabestellen für Portionen vorgesehen sein, an denen Portionen zwischen zumindest zwei getrennten Fördersystemen übergeben werden. Dabei können beispielsweise zwei unterschiedliche Fördersysteme vorgesehen sein, vorzugsweise ein Transportmover-Kreislauf und eine herkömmliche Bandanlage im Bereich der Aufschneidevorrichtung. Die Portionen können insbesondere von der herkömmlichen Bandanlage an den Transportmover-Kreislauf übergeben werden, welcher z.B. nur den Neben-Produktstrom zum Bilden einer Mehrsorten-Packung fördert.

Insbesondere kann zur Aufnahme und/oder Abgabe der Portionen vom Förderband zum Bahnsystem ein Messerkantenband oder eine Übergabevorrichtung, insbesondere mit in die Transportmover eingreifenden Riemen, mit zumindest einem Förderband oder mit zumindest einer Robotereinrichtung vorgesehen sein. Über das Messerkantenband können die Portionen von einem Förderband auf die Transportmover geladen werden. Werden die Transportmover zunächst mit einem Förderband befördert, können Riemen in Schlitze der Transportmover kämmend eingreifen, um diese auf das Bahnsystem zu bewegen. Auch bei der Übergabe der Transportmover von dem Bahnsystem auf ein Förderband können Riemen in die Transportmover eingreifen. Somit können Portionen auf einfache und kostengünstige Weise von einem Förderband auf das Bahnsystem bzw. von dem Bahnsystem auf das Förderband übergeben werden. Im Beladebereich bzw. Entladebereich kann alternativ zumindest eine Robotereinrichtung, vorzugsweise mit einem Picker, vorgesehen sein. Die Robotereinrichtung kann z.B. Portionen, die Träger und/oder die Transportmover von einem Förderband auf das Bahnsystem bzw. von dem Bahnsystem auf ein Förderband übergeben.

Insbesondere können die Portionen somit zunächst nach dem Abschneiden auf ein Portionierband gelangen. Hierbei können diese über ein herkömmliches Steuerband abgefördert und schließlich an ein Bahnsystem als multifunktionales Zwischenglied übergeben werden. An Einlegepunkten kann eine Einlegevorrichtung vorgesehen sein, welche die Portionen auf die Transportmover des Bahnsystems übergibt. Dabei kann eine Teilstrecke des Bahnsystems unterhalb eines Einlegebands mit gleicher Längsausrichtung hindurchgeführt werden. Die Portionen können dabei über das Einlegeband auf die Transportmover transportiert werden. Optional kann auch eine Teilstrecke des Bahnsystems quer, d.h. im rechten Winkel, zum Einlegeband an den Einlegepunkt geführt werden, beispielsweise um eine Teilportion mit einer anderen Orientierung auf einen Transportmover abzulegen.

Vorzugsweise kann jede Teilstrecke des Bahnsystems zu einem Einlegepunkt an einer Aufschneidevorrichtung als Nebenstrecke des Gesamtbahnsystems ausgebildet sei. Die Transportmover können auf diese Nebenstrecke abzweigen, um Portionen abzuholen. Im Normalbetrieb fahren die Transportmover entlang des Streckensystems einfach durch und umgehen somit die betreffende Aufschneidevorrichtung, falls dort keine Portionen abgeholt werden sollen.

Über die Transportmover können die Portionen anschließend zu einer Verpackungsvorrichtung gefördert werden. Die Übergabe der Portionen kann dabei entweder direkt vom Bahnsystem in die Verpackungsvorrichtung oder durch einen zwischengeschalteten Einleger vor der Verpackungsvorrichtung erfolgen.

Alternativ können die Portionen auch direkt nach dem Aufschneiden auf den Transportmovern abgelegt werden. Anschließend können die Transportmover durch das Bahnsystem bewegt werden. Schließlich können die Portionen an eine Verpackungsvorrichtung abgegeben werden. In diesem Fall ist die gesamte Anlage als Bahnsystem ausgebildet.

In beiden Fällen können für den Rückweg vom Einlegebereich der Verpackungsvorrichtung zu der Aufschneidevorrichtung Querverbindungen mit Weichen im Bahnsystem vorgesehen sein. Auf diese Weise können die Transportmover auf direktem Weg zu den betreffenden Aufschneidevorrichtungen geleitet werden und müssen keinen kompletten Bahnumlauf durchführen. Weiterhin sind damit Überholvorgänge, Puffer- und/oder Parkbereiche und/oder ein Vorsortieren von, beispielsweise leeren, Transportmovern realisierbar. Insbesondere können im Streckenbereich einer stillstehenden Aufschneidevorrichtung nicht benötigte Transportmovern parken, so dass die Umlaufmenge an Transportmovern bzw. Portionen reduziert wird.

Gemäß einer weiteren Ausführungsform ist jeder Robotereinrichtung zumindest ein zur Aufnahme zumindest eines Transportmovers bzw. Trägers ausgebildeter Puffer zugeordnet. Dieser kann beispielsweise mehrere parallele Stecken des Bahnsystems mit Weichen im Ein- oder Auslaufbereich aufweisen. Gepuffert werden können dort beispielsweise fertige Mehrsorten-Portionen oder Monosorten-Portionen. Auch können Teilportionen für Mehrsorten-Portionen dort zunächst sortiert und in einer vorgegebenen Reihenfolge in den nachfolgenden Einlegebereich einer Verpackungsvorrichtung bzw. den Arbeitsbereich zumindest einer Robotereinrichtung gelangen.

Nach einer weiteren Ausführungsform weist das Bahnsystem zumindest eine Entladebahn auf, welche durch einen Entladebereich hindurchführt, in dem zumindest eine Verpackungsvorrichtung, insbesondere mehrere Verpackungsvorrichtungen, nebeneinander angeordnet ist. Im Entladebereich können die Portionen vom Transportmover zur Verpackungsvorrichtung übergeben werden. Die Portionen können dabei von einer Robotereinrichtung abgenommen werden. Alternativ ist es auch möglich, dass die Portionen von den Transportmovern abgekämmt werden. Ferner ist es auch denkbar, dass der Träger des Transportmovers als Förderband ausgebildet ist und somit die darauf befindlichen Portionen auf die Verpackungsvorrichtung fördert. Ein Transportmover kann insbesondere auch mehrere Übergabebereiche von Verpackungsvorrichtungen anfahren und somit beispielsweise an verschiedene Verpackungsvorrichtungen jeweils eine Teilportion abgeben.

Gemäß einer weiteren Ausführungsform verläuft die Entladebahn zumindest abschnittsweise parallel zu einem Übergabebereich einer Verpackungsvorrichtung und führt insbesondere nahe an der Verpackungsvorrichtung vorbei. Auf diese Weise wird eine Übergabe der Portionen an die Verpackungsvorrichtung erleichtert. Insbesondere befinden sich die Portionen im Wirkungsbereich der Robotereinrichtung.

Nach einer weiteren Ausführungsform führt die Entladebahn zumindest mit Teilbereichen mehrmals durch den Entladebereich hindurch. Insbesondere beschreibt die Entladebahn nach Durchquerung des Entladebereichs in einer ersten Entladestrecke eine 180°-Kurve und führt in einer zweiten Entladestrecke, vorzugsweise wenigstens auf einer Teilstrecke parallel zur ersten Entladestrecke, erneut durch den Entladebereich hindurch. Ein Bahnabschnitt des Bahnsystems kann somit zunächst einen Arbeitsbereich zumindest einer Robotereinrichtung passieren und anschließend wieder umkehren. Die Transportmover des Bahnsystems können somit auf dem Rückweg erneut den Arbeitsbereich der Robotereinrichtungen durchfahren und auf einem zum ersten Bahnabschnitt parallelen weiteren Bahnabschnitt, insbesondere möglichst dicht neben dem ersten Bahnabschnitt, zurückbewegt werden. Dadurch kann die Robotereinrichtung auf dem Rückweg der Transportmover aus dem Arbeitsbereich heraus weitere Teilportionen greifen. Für die Robotereinrichtung bedeutet dies mehr Auswahlmöglichkeiten an Teilportionen, z.B. nach Gewichtskriterien. Auf diese Weise ergeben sich insbesondere Takt- und/oder Qualitätsvorteile. So kann beispielsweise ein genaues Zielgewicht einer Mischportion, welche aus mehreren Teilportionen besteht, erreicht werden.

Gemäß einer weiteren Ausführungsform führen bei mehreren Entladebereichen mehrere, insbesondere sämtliche, Entladebahnen durch sämtliche Verpackungsvorrichtungen. Die Zusammenstellung der Portionen gestaltet sich auf diese Weise besonders variabel. Je nach Bedarf kann somit jede Verpackungsvorrichtung bzw. Robotereinrichtung auf beliebige Teilportionen sämtlicher Transportmover zugreifen.

Alternativ führt bei mehreren Entladebereichen zumindest eine Entladebahn durch mehrere, insbesondere sämtliche, Übergabebereiche der Verpackungsvorrichtungen und zumindest eine Entladebahn nicht durch zumindest einen Übergabebereich einer Verpackungsvorrichtung. Insbesondere kann eine Entladebahn einem Übergabebereich einer Verpackungsvorrichtung zugeordnet sein. Bei dieser Ausführungsform wird nicht jeder Transportmover an jeder Verpackungsvorrichtung vorbeigeführt, so dass kürzere Wegstrecken für die Transportmover möglich sind. Auf diese Weise werden sowohl Bahnmaterial als auch Zeit eingespart.

Die Erfindung betrifft auch ein Verfahren zum Bewegen von Portionen, die jeweils wenigstens eine von einem Lebensmittelprodukt mittels zumindest einer Aufschneidevorrichtung, insbesondere Hochgeschwindigkeits-Slicer, abgetrennte Scheibe umfassen, bei dem die Portionen mittels einer Mehrzahl individuell bewegbarer Transportmover bewegt werden, die mittels einer Steuereinrichtung in einem Bahnsystem entlang wenigstens einer vorgegebenen Bahn zu zumindest einer Verpackungsvorrichtung bewegt, insbesondere verteilt und/oder einer Bahn zugeordnet, und dort verpackt werden, wobei die Transportmover jeweils zumindest einen mit dem Bahnsystem zusammenwirkenden Läufer und wenigstens einen am Läufer angebrachten Träger für Portionen umfassen.

Gemäß einer Ausführungsform wird zumindest ein Transportmover mehrmals an der Aufschneidevorrichtung vorbeibewegt, um die Portion in einem vorgegebenen Format anzuordnen, insbesondere mit zueinander versetzten Scheiben, und/oder um nacheinander Teilportionen aufzunehmen und zu einer Gesamtportion zu kombinieren. Das Bahnsystem kann dabei insbesondere einen kreisförmigen Bahnabschnitt umfassen. Auf diese Weise muss der Transportmover nicht wieder zurückbewegt werden, sondern kann stets in derselben Richtung angetrieben und mehrmals an der Aufschneidevorrichtung vorbeibewegt werden. Alternativ ist es jedoch auch möglich, den Transportmover zur Aufschneidevorrichtung hin und auf demselben Weg wieder zurück und erneut hin zur Aufschneidevorrichtung zu bewegen. Auch kann der Transportmover zunächst zur Aufschneidevorrichtung verfahren werden, um dort eine erste Teilportion aufzunehmen. Anschließend kann der Transportmover geringfügig weiterbewegt werden, um eine zweite Teilportion aufzunehmen. Die einzelnen Teilportionen bilden hierbei ein Format mit versetzt zueinander angeordneten Scheiben, beispielsweise zwei Reihen nebeneinander.

Nach einer weiteren Ausführungsform wird der Transportmover nacheinander in, insbesondere zwei oder mehr, unterschiedlichen Bahnen an der Aufschneidevorrichtung vorbeibewegt. Die Bahnen werden zumindest im Einlegebereich parallel nebeneinander geführt und können insbesondere als Kreisbahnen mit unterschiedlichen Radien ausgebildet sein. Auf diese Weise muss die Aufschneidevorrichtung selbst nicht verstellt werden, um versetzte Teilportionen zu erzeugen. Der Transportmover wird z.B. einmal in einer Kreisbahn mit geringerem und einmal in einer Kreisbahn mit größerem Radius bewegt, so dass die Teilportionen automatisch an unterschiedlichen, parallelen Positionen auf dem Transportmover abgelegt werden.

Alternativ oder zusätzlich ist es auch möglich, dass ein Einleger der Aufschneidevorrichtung relativ zur Bahn verstellt wird. Der Transportmover kann dabei insbesondere auf einer einzigen Kreisbahn bewegt werden, während die Teilportionen aufgrund der Bewegung des Einlegers an unterschiedlichen Positionen des Transportmovers abgelegt werden können. Beispielsweise führt ein gegenüber der Bahn seitliches Verschwenken des Einlegers zu einem Parallelversatz von Teilportionen auf einem Transportmover.

Somit können auf einfache Weise Formate gebildet werden, bei denen die Teilportionen versetzt zueinander angeordnet sind.

Alle hier beschriebenen Ausführungsformen des Systems sind insbesondere dazu ausgebildet, nach dem hier beschriebenen Verfahren betrieben zu werden. Ferner können alle hier beschriebenen Ausführungsformen des Systems sowie alle hier beschriebenen Ausführungsformen des Verfahrens jeweils miteinander kombiniert werden.

Die Erfindung wird im Folgenden beispielhaft unter Bezugnahme auf die Zeichnungen beschrieben. Es zeigen:

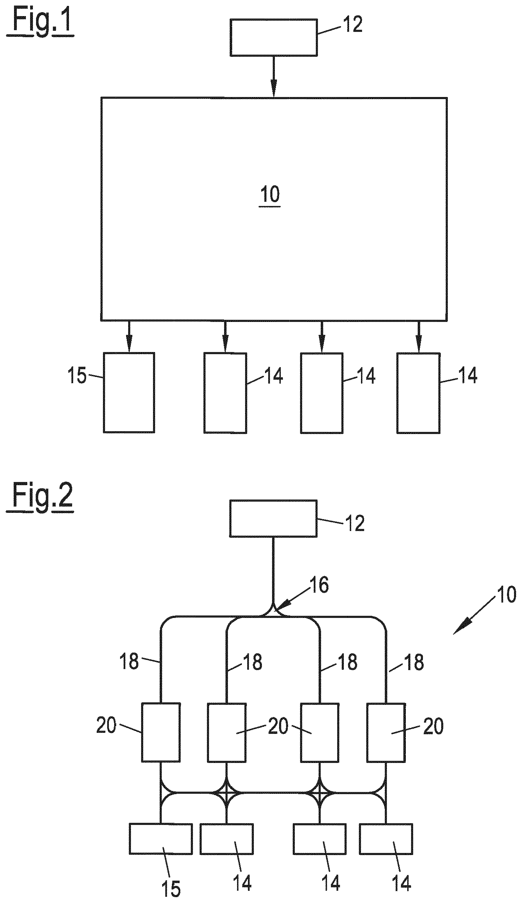

- Fig. 1 bis Fig. 16: jeweils eine schematische Draufsicht auf eine mögliche Ausgestaltung einer erfindungsgemäßen Gesamtanlage.

Zunächst wird festgestellt, dass die dargestellten Ausführungsformen rein beispielhafter Natur sind. Insbesondere können die Anzahl sowie der Verlauf der dargestellten Bahnabschnitte sowie die Anzahl der gezeigten Aufschneidevorrichtungen und/oder die Anzahl sowie die Art der Verpackungsvorrichtungen variieren. Beispielsweise sind in einigen Figuren nur einspurige Systeme bzw. Bahnabschnitte in schematischen Darstellungen gezeigt. Diese Systeme können mehrspurig gestaltet und auch mit entsprechenden Rücklaufstrecken, insbesondere zur Rückführung leerer Transportmover, versehen sein. Insbesondere können die gezeigten Tiefzieh-Verpackungsvorrichtungen beliebig durch Tray-Verpackungsvorrichtungen ersetzt werden und umgekehrt. Die Merkmale einer Ausführungsform können auch beliebig mit Merkmalen einer anderen Ausführungsform kombiniert werden.

Die im Folgenden beschriebenen Ausführungsbeispiele der Erfindung basieren auf einem Antriebsprinzip für Transportmover in einem Bahnsystem durch lineare Synchronmotoren (LSM-Antrieb), wie es im Einleitungsteil unter Bezugnahme auf das Transportsystem der Firma MagneMotion Inc. beispielhaft erläutert ist. Beliebig viele Mover in einem beliebig komplexen Bahnsystem können mittels einer Steuereinrichtung individuell, d.h. unabhängig voneinander, im Bahnsystem bewegt und mittels der Steuereinrichtung lokalisiert und identifiziert werden. Ferner können die Mover im Bahnsystem mit hoher Genauigkeit bewegt und positioniert werden. Die Bewegungsgeschwindigkeiten sowie Beschleunigungen und Verzögerungen für die Mover können ebenfalls beliebig und individuell vorgenommen werden.

Die Mover sind in den Zeichnungen nicht dargestellt. Diese können als Läufer ausgebildet werden, welche sich über einen Bahnabschnitt des Bahnsystems 10 bewegen können. Das Bahnsystem 10 umfasst eine als Stator des LSM-Antriebs dienende Basis, die auch als mechanische Basis zur Anbringung des Bahnabschnitts beispielsweise an einem Unterbau bzw. an wie auch immer gearteten Gestellen oder Halterungen dient. Der Bahnabschnitt kann als sogenannter U-Typ ausgebildet sein, d.h. der Bahnabschnitt kann nach oben offen sein, während sich die Mover oberhalb des Stators befinden.

Als Führung für die Mover können als Winkelbleche ausgeführte Führungsschienen dienen, die in Schlitzen laufen, welche an den Seitenflächen der Läufer der Mover ausgebildet sind. Die Führungen des Bahnsystems für die Mover können aber auch anders ausgestaltet sein.

Die Führung des Bahnsystems sorgt für eine definierte Relativposition des Läufers bezüglich des Stators. Insbesondere wird hierdurch erreicht, dass eine Permanentmagnetanordnung des Läufers einen exakt definierten Abstand zum Stator einhält.

Gemäß dem LSM-Antrieb ist der mit einer Permanentmagnetanordnung versehene Läufer durch entsprechende Ansteuerung des Stators mittels einer Steuereinrichtung in Transportrichtung längs des Stators und somit in der den Stator umfassenden Bahn bewegbar. Während dieser Bewegung kann der Läufer durch die Führungsschienen geführt werden.

Auf dem Läufer kann ein Träger angeordnet sein, der eine beispielsweise ebene Auflagefläche bereitstellt, um Lebensmittelportionen zu transportieren.

Der Träger kann mit dem Läufer fest verbunden sein. Alternativ kann der Träger am Läufer auch lösbar angebracht sein. Das Bahnsystem 10, auf welchem die Mover bewegt werden können, ist, wie in Fig. 1 gezeigt, als flexibles Zwischenglied zwischen einer Aufschneidevorrichtung 12 und Verpackungsvorrichtungen 14, 15 angeordnet. Die Aufschneidevorrichtung 12 kann ein rotatorisch und/oder planetarisch umlaufendes Kreis- oder Sichelmesser umfassen. Insbesondere können durch die Aufschneidevorrichtung 12 mehrere Lebensmittelprodukte gleichzeitig aufgeschnitten werden.

Die Verpackungsvorrichtungen 14, 15 können als Tiefzieh-Verpackungsvorrichtungen 14 oder als Tray-Verpackungsvorrichtungen 15 ausgebildet und im Sinne einer Parallelschaltung nebeneinander angeordnet sein. Dadurch, dass unterschiedliche Verpackungsvorrichtungen 14, 15 vorgesehen sind, können beispielsweise Schwankungen in der Produktzuführung ausgeglichen werden. Auch können Portionen derselben Anlage auf unterschiedliche Weise verpackt werden. Diese Flexibilität wird insbesondere durch das Bahnsystem 10 ermöglicht. Dieses ist in Fig. 1 als Black Box dargestellt. Die einzelnen Bahnabschnitte des Bahnsystems 10 können hierbei grundsätzlich auf beliebige Weise angeordnet sein und die Aufschneidevorrichtung 12 mit den Verpackungsvorrichtungen 14, 15 auf verschiedenste Arten verbinden.

Eine mögliche Ausführungsform eines Bahnsystems 10 ist in Fig. 2 dargestellt. Eine einzelne Aufschneidevorrichtung 12 versorgt mehrere Verpackungsvorrichtungen 14 bzw. 15. Die dargestellte Aufteilung in Tiefzieh-Verpackungsvorrichtungen 14 sowie Tray-Verpackungsvorrichtungen 15 ist hierbei rein beispielhaft und kann beliebig variiert werden. Insbesondere können auch alle Verpackungsvorrichtungen 14, 15 vom selben Typ sein.

Die von der Aufschneidevorrichtung 12 kommende Spur des Bahnsystems 10 wird an einer Verteilungsweiche 16 in vier Funktionsspuren 18 aufgeteilt. Die Funktionsspuren 18 weisen jeweils einen Puffer 20 auf. Der Puffer 20 kann als separates Bauteil ausgebildet sein. Auch kann ein paralleler Bahnabschnitt vorgesehen sein, auf welchem die Mover gepuffert werden. Anschließend werden die Transportmover zu den Verpackungsvorrichtungen 14, 15 gesteuert. Die Portionen werden anschließend verpackt. Hat ein Transportmover eine Portion abgegeben, so kann der Transportmover auf einer nicht gezeigten Rückführungsspur wieder zur Aufschneidevorrichtung 12 zurückbewegt werden.

Vor den Verpackungsvorrichtungen 14, 15 kann auch ein quer verlaufender Bahnabschnitt vorgesehen sein, so dass die Portionen aus den Puffern 20 beliebigen Verpackungsvorrichtungen 14, 15 zugeführt werden können. Insbesondere können somit auf einfache Weise Mischportionen erzeugt werden. So können Portionen unterschiedlicher Sorte in den Puffern 20 zwischengespeichert und nach Bedarf einer entsprechenden Verpackungsvorrichtung 14, 15 zugeführt werden. Auch die Erzeugung gewichtsgenauer Portionen wird durch das erfindungsgemäße Bahnsystem 10 deutlich erleichtert, da Portionen nach ihrem Gewicht einer entsprechenden Verpackungsvorrichtung 14, 15 zugeführt werden können.

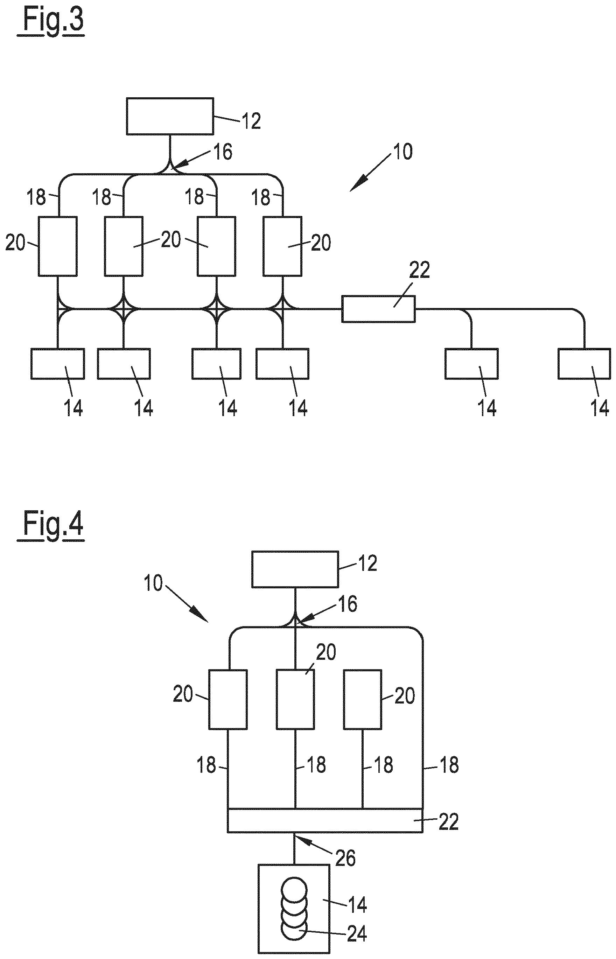

Bei der in Fig. 3 gezeigten Ausführungsform ist ein Mehrsortenbilder 22 vorgesehen. Insbesondere können hierbei Transportmover zum Mehrsortenbilder 22 verfahren werden und Teilportionen abladen. Die gebildeten Mischportionen können anschließend beispielsweise mithilfe eines Transportmovers bzw. mithilfe eines Förderbandes oder eines Pickers zu den Verpackungsvorrichtungen 14 überführt und dort verpackt werden. Alternativ können die Teilportionen unterschiedlicher Sorte auch unmittelbar in die Verpackungsvorrichtungen 14 eingelegt werden.

Auf diese Weise ist es möglich, dass gleichzeitig bzw. alternativ Portionen einer Sorte sowie Mischportionen erstellt und verpackt werden können. Die Transportmover können dazu beliebig die gesamte Portion bzw. Teilportionen an die Verpackungsvorrichtungen 14 bzw. an den Mehrsortenbilder 22 abgeben. Je nachdem, ob eine Portion mit einer einzigen Sorte oder eine Portion mit unterschiedlichen Sorten verpackt werden soll, können die Transportmover entsprechend gesteuert werden.

Bei der Ausführungsform gemäß Fig. 4 sind lediglich eine einzige Aufschneidevorrichtung 12 und eine einzige Verpackungsvorrichtung 14 vorgesehen. Auch bei dieser kompakten Ausgestaltung ist die Erzeugung von Mischportionen 24 möglich.

So kann beispielsweise jede Funktionsspur 18 einen Puffer 20 aufweisen. Wie dargestellt ist es jedoch auch denkbar, dass eine Funktionsspur 18 keinen Puffer 20 aufweist. Zur Erzeugung einer Mischportion können Produkte unterschiedlicher Sorte zunächst in den Puffern 20 zwischengespeichert werden. Eine weitere Produktsorte kann anschließend von der Aufschneidevorrichtung 12 aufgeschnitten und in der Funktionsspur 18 ohne Puffer 20 zum Mehrsortenbilder 22 gefördert werden. Diese Teilportion kann durch Teilportionen, welche in den Puffern 20 zwischengespeichert sind, zu einer Mischportion 24 ergänzt werden. Der Mehrsortenbilder 22 dient hierbei auch als Verbindungsweiche 26, um die einzelnen Funktionsspuren 18 auf eine gemeinsame Spur zusammenzuführen und somit die Mischportion 24 auf eine gemeinsame Verpackungsvorrichtung 14 zu befördern. Die Verpackungsvorrichtung 14 kann insbesondere einen Einleger umfassen, auf welchen die Mischportionen 24 abgelegt werden können. Insbesondere kann der Mehrsortenbilder 22 einen oder mehrere Picker umfassen, um die Teilportionen der Verpackungsvorrichtung 14 zuzuführen.

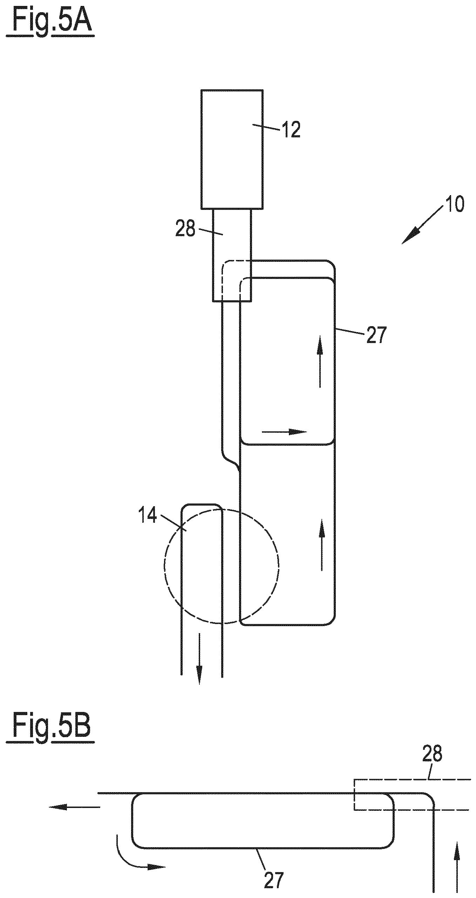

Gemäß der in Fig. 5A dargestellten Ausführungsform umfasst das Bahnsystem 10 Bahnabschnitte, welche als "liegende 8" ausgebildet sind. Die obere Schlaufe dient hierbei der Aufnahme von Portionen, während die untere Schlaufe der Abgabe von Portionen an eine Verpackungsvorrichtung 14 sowie einer Rückführung der entladenen Mover zur Aufschneidevorrichtung 12 dient. Der Transportmover kann mehrfach durch die obere Schleife geführt werden. Um aus Teilportionen ein gewünschtes Format zu bilden, kann hierbei auch eine Schlaufe mit einem größeren Radius bzw. einem Parallelversatz durchfahren werden. So kann selbst bei einer feststehenden Position eines Einlegers 28 der Aufschneidevorrichtung 10 eine bezüglich der ersten Teilportion versetzte Ablage einer zweiten Teilportion erfolgen. Alternativ kann die obere Schlaufe auch lediglich eine Bahn aufweisen. Wird die Schlaufe mehrfach durchfahren, kann die Position des Einlegers 28 verstellt werden, wodurch die Teilportionen an unterschiedlichen Positionen abgelegt werden können. Der Bahnabschnitt, auf dem die Mover zurückgeführt werden, wird auch als Rücktransportstrecke 27 bezeichnet.

In dem Ausführungsbeispiel der Fig. 5B zweigt eine Rücktransportstrecke 27 vom Hauptstrom ab und mündet stromaufwärts wieder in den Hauptstrom. Mover, welche fehlerhafte Portionen enthalten, können auf die Rücktransportstrecke 27 ausgeschleust, korrigiert und wieder in den Hauptstrom eingeschleust werden. Auch können Mover, welche Schneidreste transportieren, auf der Rücktransportstrecke 27 von diesen Resten befreit werden.

Da beispielsweise der Bereich unterhalb eines Einlegers 28, z.B. eines Einlegerbands, besonders verschmutzungsanfällig ist, kann über die Rücktransportstrecke 27 zwischen zwei aufeinander folgenden Movern, welche mit Portionen beladen werden, ein Abdeckmover eingeschleust werden, welcher selbst keine Portionen transportiert und lediglich dazu dient, einen Bereich des Bahnsystems abzudecken, so dass keine Produktreste auf das Gleis gelangen.

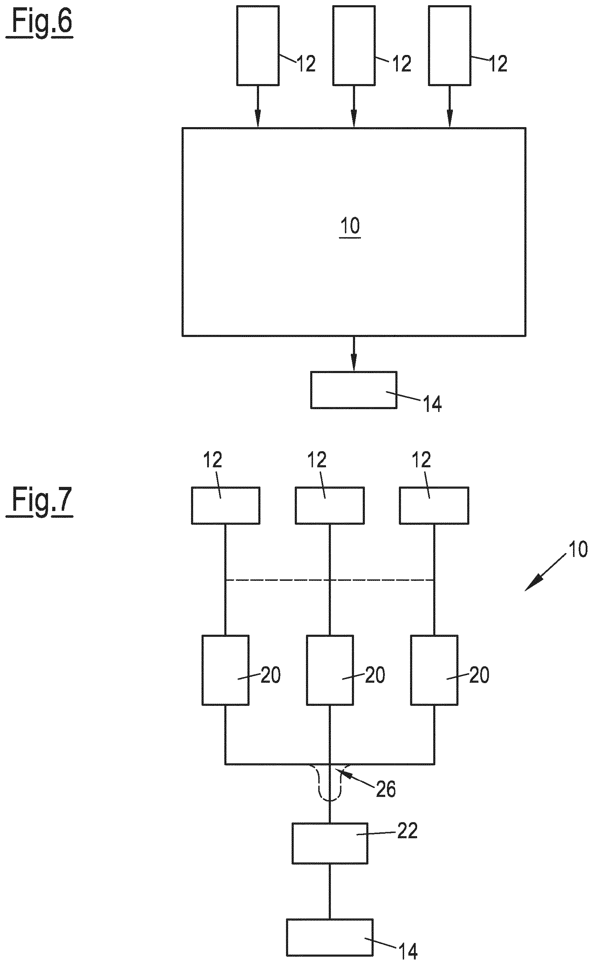

Bei der Ausführungsform gemäß Fig. 6 sind mehr Aufschneidevorrichtungen 12 als Verpackungsvorrichtungen 14 vorgesehen. Konkret stehen drei Aufschneidevorrichtungen 12 einer einzigen Verpackungsvorrichtung 14 gegenüber. Bei den Aufschneidevorrichtungen 12 kann es sich um relativ kleine, einfache, insbesondere nur einspurige, Aufschneidevorrichtungen 12 handeln, welche mit einer leistungsstarken Verpackungsvorrichtung 14 kombiniert werden. Das Bahnsystem 10 ist hierbei als Black Box dargestellt.

Eine beispielhafte Ausführungsform mit einem entsprechenden Bahnsystem 10 ist in Fig. 7 dargestellt. Jeder Aufschneidevorrichtung 12 ist hierbei ein Puffer 20 zugeordnet. Über eine Verbindungsweiche 26 können die separaten Spuren auf eine gemeinsame Spur gebracht und einem Mehrsortenbilder 22 zugeführt werden. Anschließend können die Portionen durch die Verpackungsvorrichtung 14 verpackt werden. Der Mehrsortenbilder 22 ist hierbei fakultativ, so dass auch Monosorten bzw. Mehrsorten direkt auf der Verpackungsvorrichtung 14 erzeugt werden können.

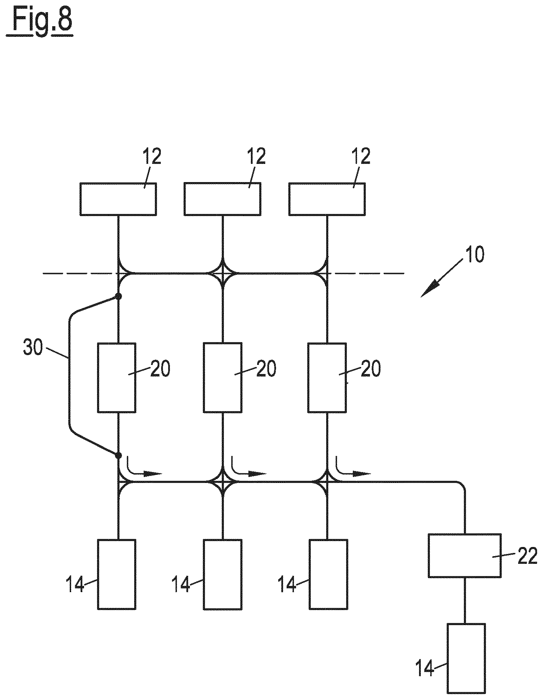

Bei der in Fig. 8 gezeigten Ausführungsform sind mehrere Aufschneidevorrichtungen 12 und mehrere Verpackungsvorrichtungen 14 vorgesehen. Unmittelbar nach den Aufschneidevorrichtungen 12, also bis zur gestrichelten Linie, kann auch ein herkömmliches Förderband vorgesehen sein. Mithilfe einer entsprechenden Übergabevorrichtung, z.B. mit einem Picker, können die Portionen vom Bahnsystem zu den Movern übergeben werden. Alternativ kann auch dieser Abschnitt bereits vom Bahnsystem 10 erfasst sein, wobei die Portionen von den Aufschneidevorrichtungen 12 unmittelbar auf die Mover gelangen. Jeder Aufschneidevorrichtung 12 ist ein Puffer 20 zugeordnet. Die Puffer 20 können jedoch auch mithilfe einer als Überbrückung 30 ausgebildeten Ausweichstrecke umfahren werden. Es können sowohl Monosorten als auch, insbesondere mithilfe des Mehrsortenbilders 22, Mischportionen erzeugt und anschließend verpackt werden.

Für die Erzeugung von Mischportionen können insbesondere auch Teilportionen abgezweigt werden.

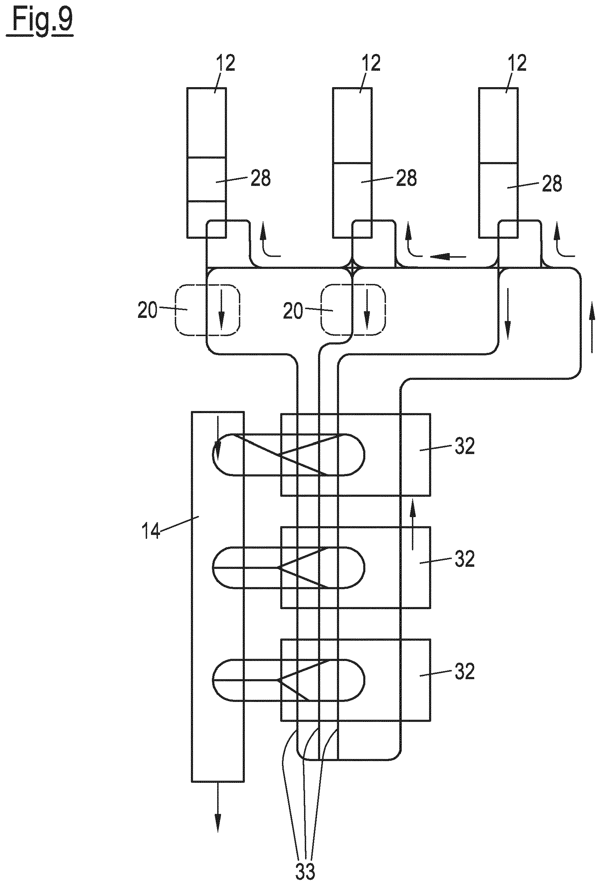

In Fig. 9 ist eine weitere Ausführungsform dargestellt, bei der drei Aufschneidevorrichtungen 12 eine Verpackungsvorrichtung 14 mit Portionen versorgen, wobei die Portionen mithilfe von drei Robotereinrichtungen 32 an die Verpackungsvorrichtung 14 übergeben werden. Die Portionen können von den Aufschneidevorrichtungen 12 mittels Einlegebänder 28 an die Transportmover abgegeben werden. Die Transportmover können optional mithilfe der Puffer 20 gepuffert werden. Anschließend werden die Transportmover in einer Entladebahn 33 an den Robotereinrichtungen 32 vorbeibewegt. Je nach gewünschter Portion können hierbei entsprechend Teilportionen bzw. die gesamten Portionen durch die Robotereinrichtungen 32 von den Transportmovern abgenommen und zur Verpackungsvorrichtung 14 übergeben werden. Auf diese Weise können auch Mischportionen erzeugt werden. Nachdem die Portionen von den Transportmovern entnommen wurden, werden diese auf einem gemeinsamen Bahnabschnitt wieder zurück zu den Aufschneidevorrichtungen 12 bewegt.

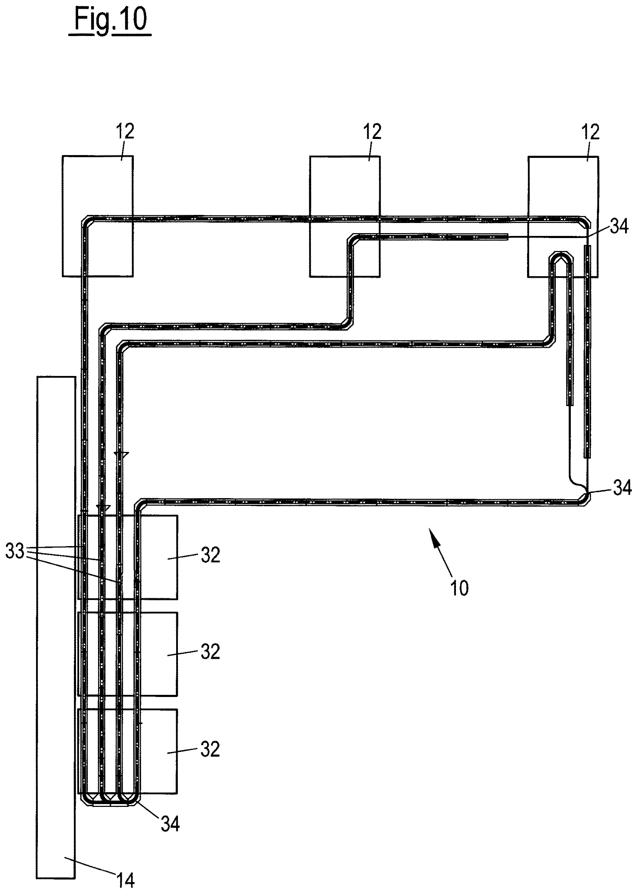

Eine ähnliche Situation ist in Fig. 10 dargestellt. Ein Bahnabschnitt verläuft hierbei an allen drei Aufschneidevorrichtungen 12 vorbei. Anschließend werden die Transportmover in der Entladebahn 33 an drei Robotereinrichtungen 32 vorbeigeführt. Ein weiterer Bahnabschnitt wird abgezweigt, welcher nur an zwei Aufschneidevorrichtungen 12 vorbei und dann zu den Robotereinrichtungen 32 geführt wird. Schließlich zweigt ein dritter Bahnabschnitt ab, welcher lediglich an einer Aufschneidevorrichtung 12 vorbeigeführt wird. Auf diese Weise werden alle Arbeitsbereiche der Robotereinrichtungen 32 von allen Bahnabschnitten, welcher Transportmover mit Portionen fördern, parallel durchgriffen. Nach Zusammenfassung dieser Bahnabschnitte auf eine gemeinsame Rücklaufstrecke in Richtung der Aufschneidevorrichtungen 12 verläuft das erste Teilstück dieser Rücklaufstrecke ebenfalls durch alle drei Robotereinrichtungen 32. Auch auf dem Rückweg können Portionen von den Transportmovern abgenommen und zur Verpackungsvorrichtung 14 übergeben werden.

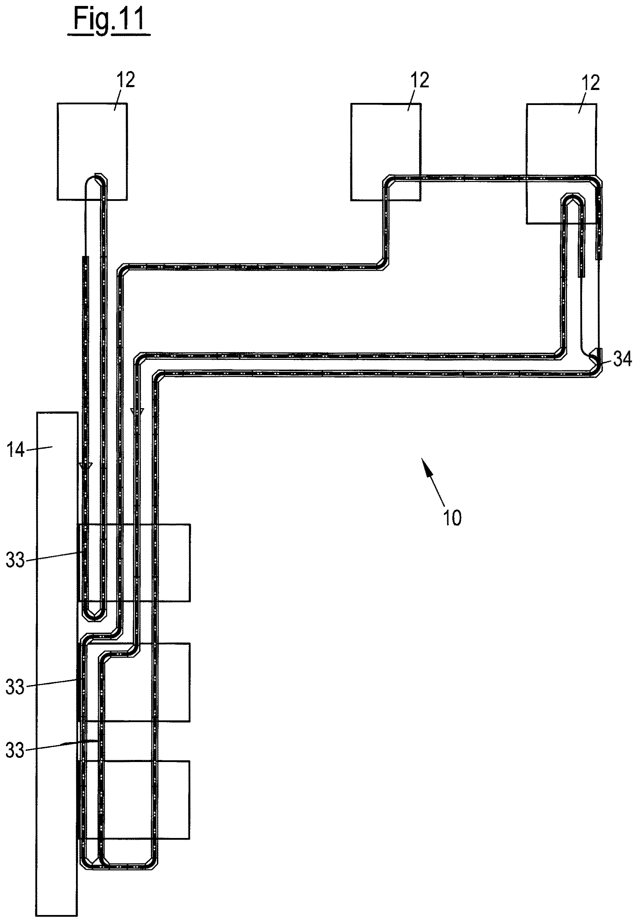

Eine weitere Variante ist in Fig. 11 dargestellt. Dabei ist eine Aufschneidevorrichtung 12 ausschließlich über einen unabhängigen Bahnabschnitt mit einer einzigen Robotereinrichtung 32 verbunden. Ein weiterer Bahnabschnitt führt über die anderen beiden Aufschneidevorrichtungen 12 zu allen drei Robotereinrichtungen 32. Entsprechend ist ein weiterer Bahnabschnitt vorgesehen, welcher zur Aufnahme von Portionen lediglich zu einer einzigen Aufschneidevorrichtung 12 geführt wird. Die letztgenannten beiden Bahnabschnitte werden nach Durchlaufen der Robotereinrichtungen 32 in eine gemeinsame Rücklaufstrecke überführt, welche durch alle drei Robotereinrichtungen 32 verläuft.

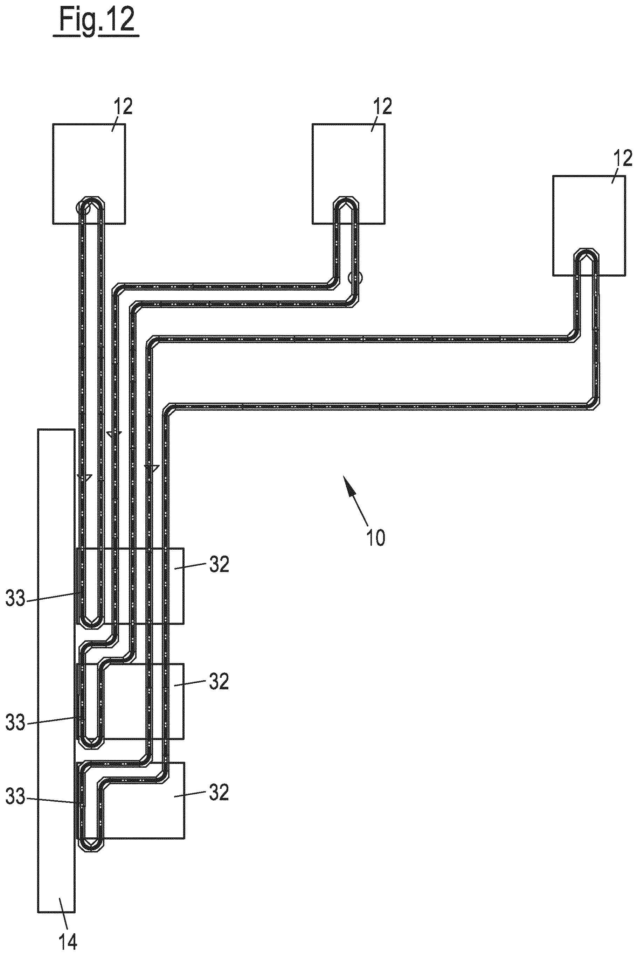

In Fig. 12 ist eine Ausführungsform gezeigt, bei der jede Aufschneidevorrichtung 12 einen separaten, individuell zugeordneten Bahnabschnitt aufweist, wobei die Bahnabschnitte nicht miteinander verbunden sind. Eine Aufschneidevorrichtung 12 ist hierbei lediglich mit einer einzigen Robotereinrichtung 32 verbunden. Eine weitere Aufschneidevorrichtung 12 ist hingegen mit zwei Robotereinrichtungen 32 verbunden, während eine weitere Aufschneidevorrichtung 12 mit sämtlichen Robotereinrichtungen verbunden ist. Die Bahnabschnitte werden jeweils um 180° gedreht und verlaufen auf dem Rückweg abermals durch die jeweiligen Robotereinrichtungen 32.

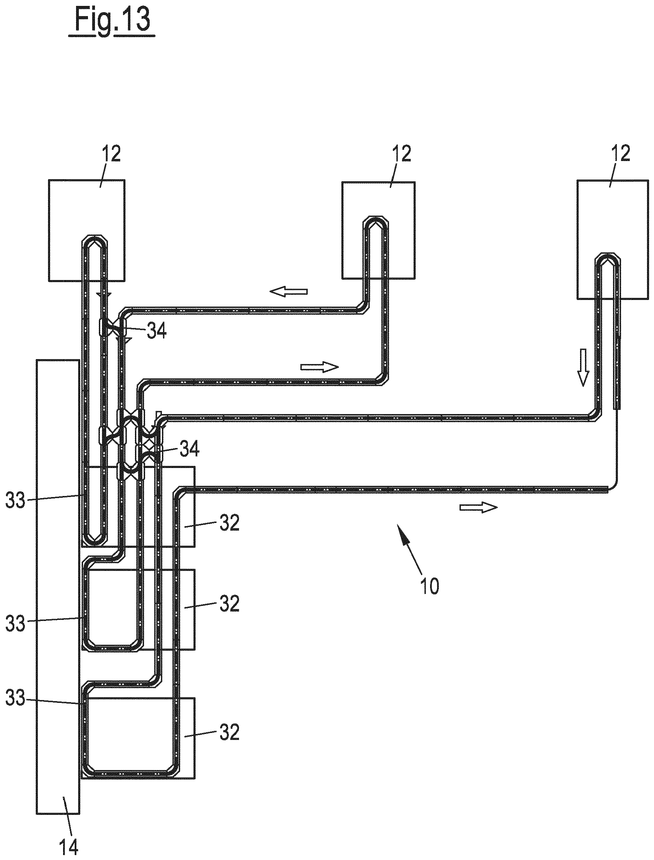

Die Ausführungsform gemäß Fig. 13 entspricht im Wesentlichen der Ausführungsform gemäß Fig. 12. Jedoch sind die einzelnen Bahnabschnitte über Weichen 34 miteinander verbunden, so dass die Transportmover auch beliebig zwischen den Bahnabschnitten bzw. in der Zuordnung zu den Systemkomponenten wechseln können.

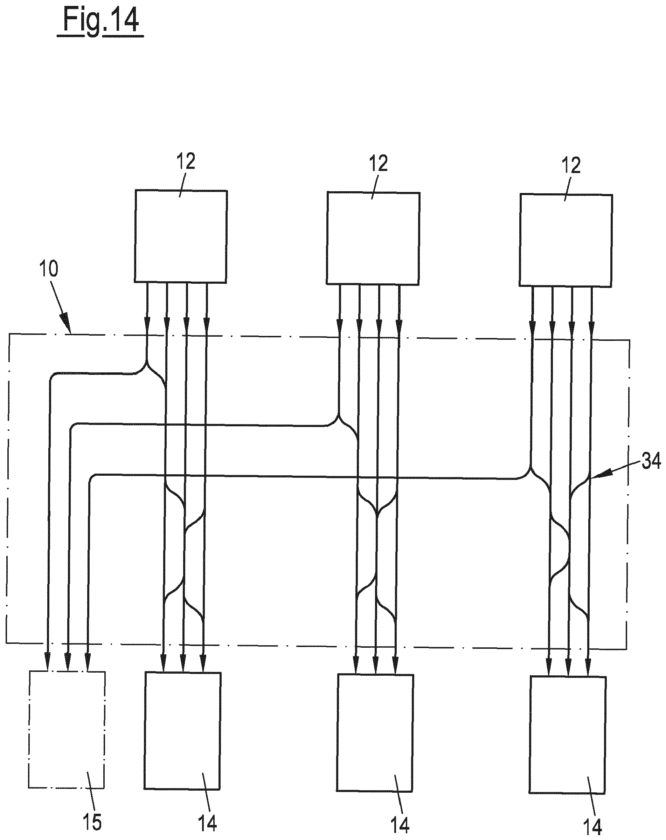

In Fig. 14 ist eine weitere Ausführungsform gezeigt, bei der drei Aufschneidevorrichtungen 12 vorgesehen sind. Schematisch sind das mehrspurige Aufschneiden und die sich dadurch ergebende mehrspurige Portionsförderung gezeigt. Zur links außen gezeigten Verpackungsvorrichtung 14 können Teilportionen, welche aus sämtlichen Aufschneidevorrichtungen 12 stammen können, abgezweigt werden. Auf diese Weise können dort Mischportionen verpackt werden. Im Hauptförderstrom versorgt jedoch jede Aufschneidevorrichtung 12 eine eigene Verpackungsvorrichtung 14 mit jeweils derselben Produktsorte. Alternativ oder zusätzlich kann auch eine Tray-Verpackungsvorrichtung 15 vorgesehen sein.

Die Abzweigung für eine Erzeugung von Mischportionen kann permanent oder nur vorübergehend erfolgen.

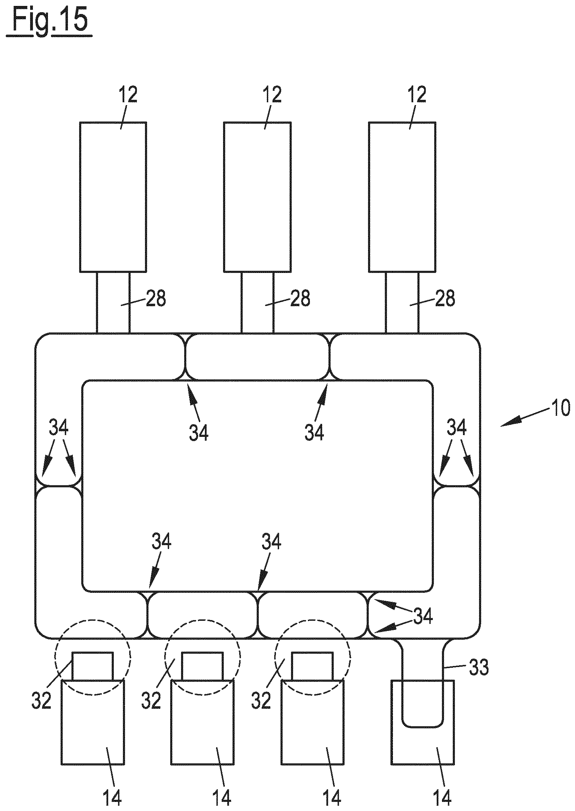

Gemäß der Ausführungsform in Fig. 15 ist das Bahnsystem 10 als Zwei- bzw. Mehrspursystem ausgebildet. Die Transportmover können über Weichen 34 beliebig zwischen einer inneren und einer äußeren Bahn wechseln. Die Portionen können insbesondere gepuffert werden. Ferner können Aufschneidevorrichtungen 12 bzw. Verpackungsvorrichtungen 14 beliebig umfahren werden. Auch ist ein gegenseitiges Überholen der Transportmover möglich, genauso wie ein Richtungswechsel, z.B. in Abhängigkeit von dem aktuellen Betriebszustand. Die Portionen können mithilfe von Robotereinrichtungen 32 an die Verpackungsvorrichtungen 14 übergeben werden. Es ist jedoch auch möglich, dass ein Bahnabschnitt, wie bei der rechts gezeigten Verpackungsvorrichtung 14, nahe an der Verpackungsvorrichtung 14 vorbeigeführt wird. Die Portionen können dabei direkt vom Transportmover an die Verpackungsvorrichtung 14 übergeben, beispielsweise abgekämmt, werden. Auch können die Transportmover z.B. bewegliche Förderbänder aufweisen, über welche die Portionen direkt in die Verpackungsvorrichtung 14 gefördert werden können.

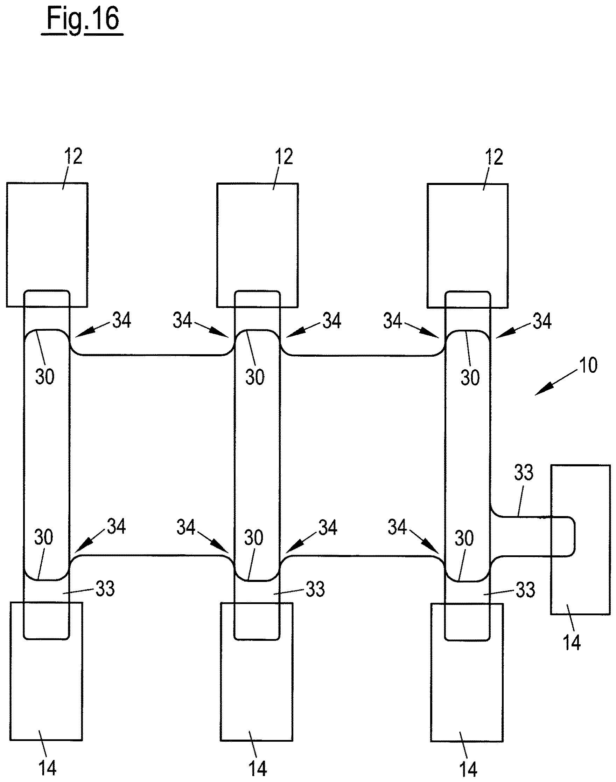

Eine weitere mögliche Ausgestaltung eines Bahnsystems 10 ist in Fig. 16 gezeigt. Auch hier sind vier Verpackungsvorrichtungen 14 vorgesehen. Beispielsweise in den unteren Verpackungsvorrichtungen 14 können Monosorten erzeugt und verpackt werden, während bei der rechts außen gezeigten Verpackungsvorrichtung 14 insbesondere Mehrsorten erzeugt und verpackt werden können.

Das Bahn- bzw. Magnetfördersystem 10 kann in sämtlichen Fällen als Verbindungskomponente zur Portionshandhabung zwischen zumindest einer Aufschneidevorrichtung und zumindest einer Verpackungsvorrichtung dienen. Insbesondere kann das Bahnsystem 10 hierbei einen Puffer 20 umfassen bzw. nur teilweise als Puffer 20 ausgebildet sein. Dabei kann ein Zugriff auf den Pufferinhalt erfolgen bzw. können Portionen auch bedarfsgerecht aus dem Puffer 20 einer Verpackungsvorrichtung 14, 15 zugewiesen werden.

Erfindungsgemäß wird somit ein äußerst flexibles System geschaffen, bei dem Portionen auf einfache Weise gruppiert und gepuffert werden können. Insbesondere ist stets ein kontinuierliches Verpacken von sowohl Mono- als auch Mehrsorten-Portionen möglich. Teilportionen und Scheiben können gleichzeitig oder nacheinander erzeugt werden.

### Bezugszeichenliste

- 10: Bahnsystem
- 12: Aufschneidevorrichtung
- 14: Tiefzieh-Verpackungsvorrichtung
- 15: Tray-Verpackungsvorrichtung
- 16: Verteilungsweiche
- 18: Funktionsspur
- 20: Puffer
- 22: Mehrsortenbilder
- 24: Mischportion
- 26: Verbindungsweiche
- 27: Rücktransportstrecke
- 28: Einleger
- 30: Überbrückung, Ausweichstrecke
- 32: Robotereinrichtung
- 33: Entladebahn
- 34: Weiche

## Patentansprüche

1. System mit
zumindest einer Aufschneidevorrichtung (12), insbesondere Hochgeschwindigkeits-Slicer, zum Aufschneiden von Lebensmittelprodukten, einer Fördervorrichtung zum Bewegen von Portionen, die jeweils wenigstens eine von einem Lebensmittelprodukt abgetrennte Scheibe umfassen,
und
zumindest einer Verpackungsvorrichtung (14, 15) zum Verpacken der Portionen,
wobei die Fördervorrichtung eine Mehrzahl individuell bewegbarer Transportmover zum Transport von Portionen,
ein Bahnsystem (10) für die Transportmover, in welchem die Transportmover entlang wenigstens einer vorgegebenen Bahn in einer Transportrichtung bewegbar sind, und
eine Steuereinrichtung zum Steuern der Bewegungen der Transportmover in dem Bahnsystem (10)
umfasst,
wobei die Transportmover jeweils zumindest einen mit dem Bahnsystem (10) zusammenwirkenden Läufer und wenigstens einen am Läufer angebrachten Träger für Portionen umfassen,
wobei die Fördervorrichtung zum Bewegen der Portionen von der Aufschneidevorrichtung (12) zu der Verpackungsvorrichtung (14, 15) ausgebildet ist, **dadurch gekennzeichnet, dass** das Bahnsystem (10) zumindest eine Ausweichstrecke (30) umfasst, welche einen Bahnabschnitt, welcher zu einer Aufschneidevorrichtung (12) und/oder einer Verpackungsvorrichtung (14, 15) führt, überbrückt.

2. System nach Anspruch 1,
**dadurch gekennzeichnet, dass**
genau eine Aufschneidevorrichtung (12) und mehrere Verpackungsvorrichtungen (14, 15) vorgesehen sind.

3. System nach Anspruch 1 oder 2,
**dadurch gekennzeichnet, dass**
die Leistung der Aufschneidevorrichtung (12) größer als die Leistung einer Verpackungsvorrichtung (14, 15) ist, wobei die Leistung der Anzahl von Portionen entspricht, die pro Zeiteinheit erzeugt oder verpackt werden können.

4. System nach einem der vorhergehenden Ansprüche,
**dadurch gekennzeichnet, dass**
sich zumindest zwei Verpackungsvorrichtungen (14, 15) voneinander unterscheiden und insbesondere als Tiefzieh-Verpacker (14) oder Tray-Verpacker (15) ausgebildet sind.

5. System nach einem der vorhergehenden Ansprüche,
**dadurch gekennzeichnet, dass**
das Bahnsystem (10) für jede Verpackungsvorrichtung (14, 15) einen zur Aufnahme zumindest eines Transportmovers ausgebildeten Puffer (20) umfasst, wobei insbesondere der Puffer (20) wenigstens einen Bahnabschnitt oder mehrere parallele Bahnabschnitte des Bahnsystems (10) umfasst, oder dass das Bahnsystem (10) zumindest für eine Verpackungsvorrichtung (14, 15) einen zur Aufnahme zumindest eines Transportmovers ausgebildeten Puffer (20) und für zumindest eine Verpackungsvorrichtung (14, 15) keinen Puffer umfasst, wobei insbesondere der Puffer (20) wenigstens einen Bahnabschnitt oder mehrere parallele Bahnabschnitte des Bahnsystems (10) umfasst.

6. System nach einem der vorhergehenden Ansprüche,
**dadurch gekennzeichnet, dass**
die Steuereinrichtung die Transportmover derart steuert, dass mit zumindest einer Verpackungsvorrichtung (14, 15) einheitliche Portionen und mit zumindest einer Verpackungsvorrichtung (14, 15) Mischportionen (24) aus einer Kombination von Teilportionen, insbesondere unterschiedlicher Sorte und/oder unterschiedlicher Form, verpackt werden, wobei vorzugsweise die Transportmover zur Erzeugung der Mischportionen (24) vor dem Erreichen einer Verpackungsvorrichtung (14, 15) in einer vorgegebenen Reihenfolge gruppiert werden, insbesondere wobei alle Teilportionen jeweils aus einem Puffer (20) stammen und/oder insbesondere wobei zumindest eine Teilportion aus einem Puffer (20) stammt und dass zumindest eine Teilportion nicht aus einem Puffer (20) stammt und insbesondere auf direktem Weg von der Aufschneidevorrichtung (12) zur Verpackungsvorrichtung (14, 15) gefördert wird.

7. System nach einem der vorhergehenden Ansprüche,
**dadurch gekennzeichnet, dass**
zumindest ein Transportmover mit einer Teilportion aus einem Bahnabschnitt, welcher zu einer ersten Verpackungsvorrichtung (14, 15) führt, abgezweigt wird, insbesondere zur Erzeugung einer Mischportion (24) mit oder vor einer weiteren Verpackungsvorrichtung (14, 15).

8. System nach einem der vorhergehenden Ansprüche,
**dadurch gekennzeichnet, dass**
die Steuereinrichtung die Transportmover derart steuert, dass diese abhängig von einem Kriterium zumindest vorübergehend nicht direkt zu einer Aufschneidevorrichtung (12) und/oder einer Verpackungsvorrichtung (14, 15) bewegt werden, wobei insbesondere das Kriterium von der Leistung und/oder Art der Aufschneidevorrichtung (12) und/oder der Verpackungsvorrichtung (14, 15), vom Produkt, von der Portion, von einem durch mehrere angeordnete Portionen gebildeten Format und/oder von einem vorgebbaren Betriebszustand abhängt.

9. System nach Anspruch 1,
**dadurch gekennzeichnet, dass**
mehrere Aufschneidevorrichtungen (12) und genau eine Verpackungsvorrichtung (14, 15) vorgesehen sind, insbesondere wobei die Steuereinrichtung die Transportmover derart steuert, dass diese abhängig von einem Kriterium zumindest vorübergehend nicht direkt zu einer Aufschneidevorrichtung (12) bewegt werden, wobei insbesondere das Kriterium von der Leistung und/oder Art der Aufschneidevorrichtung (12) und/oder der Verpackungsvorrichtung (14, 15), vom Produkt, von der Portion, von einem durch mehrere angeordnete Portionen gebildeten Format und/oder von einem vorgebbaren Betriebszustand abhängt, und/oder dass genau eine Aufschneidevorrichtung (12) und genau eine Verpackungsvorrichtung (14, 15) vorgesehen sind, insbesondere wobei das Bahnsystem (10) mindestens eine Verteilungsweiche (16) umfasst, welche zumindest eine von der Aufschneidevorrichtung (12) kommende Spur in mehrere Funktionsspuren (18) aufteilt.

10. System nach Anspruch 9,
**dadurch gekennzeichnet, dass**
jede Funktionsspur (18) einen zur Aufnahme zumindest eines Transportmovers ausgebildeten Puffer (20) umfasst oder als Puffer (20) ausgebildet ist, oder
dass zumindest eine Funktionsspur (18) einen zur Aufnahme zumindest eines Transportmovers ausgebildeten Puffer (20) umfasst oder als Puffer (20) ausgebildet ist, wobei zumindest eine Funktionsspur (18) keinen Puffer umfasst und nicht als Puffer ausgebildet ist, und/oder dass mehrere Funktionsspuren (18) zum Transport, zur Verarbeitung, zum Kombinieren und/oder zum Puffern von Portionen oder Teilportionen unterschiedlicher Sorte ausgebildet sind.

11. System nach einem der vorhergehenden Ansprüche,
**dadurch gekennzeichnet, dass**
das Bahnsystem (10) zumindest eine Rücktransportstrecke (27) umfasst, welche von einem Bahnabschnitt, welcher von einer Aufschneidevorrichtung (12) zu einer Verpackungsvorrichtung (14, 15) führt, abzweigt und stromaufwärts wieder in den Bahnabschnitt mündet, insbesondere wobei die Rücktransportstrecke (27) dazu ausgebildet ist, einen Transportmover erneut der Aufschneidevorrichtung (12) zuzuführen, einen Transportmover zum teilweisen Abdecken des Bahnsystems auf den Bahnabschnitt einzuschleusen und/oder einen Transportmover mit Schneidresten oder fehlerhaften, insbesondere unvollständigen oder falsch positionierten, Portionen aus dem Bahnabschnitt auszuschleusen.

12. System nach einem der vorhergehenden Ansprüche,
**dadurch gekennzeichnet, dass**
zur Übergabe von Portionen von der Fördervorrichtung zur Verpackungsvorrichtung (14, 15) eine Robotereinrichtung (32) vorgesehen ist, wobei insbesondere für jede Verpackungsvorrichtung (14, 15) eine Robotereinrichtung (32) vorgesehen ist.

13. System nach einem der vorhergehenden Ansprüche,
**dadurch gekennzeichnet, dass**
das Bahnsystem (10) zumindest eine Entladebahn (33) aufweist, welche durch einen Entladebereich hindurch führt, in dem zumindest eine Verpackungsvorrichtung (14, 15), insbesondere mehrere Verpackungsvorrichtungen (14, 15) nebeneinander, angeordnet ist, insbesondere wobei die Entladebahn (33) zumindest abschnittsweise parallel zu einem Übergabebereich einer Verpackungsvorrichtung (14, 15) verläuft und insbesondere nahe an der Verpackungsvorrichtung (14, 15) vorbeiführt.

14. System nach Anspruch 13,
**dadurch gekennzeichnet, dass**
die Entladebahn (33) mehrmals durch den Entladebereich hindurchführt und insbesondere nach Durchquerung des Entladebereichs in einer ersten Entladestrecke eine 180°-Kurve beschreibt und in einer zweiten Entladestrecke, vorzugsweise wenigstens auf einer Teilstrecke parallel zur ersten Entladestrecke, erneut durch den Entladebereich hindurchführt und/oder dass
bei mehreren Entladebahnen (33) sämtliche Entladebahnen durch sämtliche Übergabebereiche der Verpackungsvorrichtungen (14, 15) führen, oder dass bei mehreren Entladebahnen (33) zumindest eine Entladebahn (33) durch mehrere, insbesondere sämtliche, Übergabebereiche der Verpackungsvorrichtungen (14, 15) führt und zumindest eine Entladebahn (33) nicht durch zumindest einen Übergabebereich einer Verpackungsvorrichtung (14, 15) führt.

15. Verfahren zum Bewegen von Portionen, die jeweils wenigstens eine von einem Lebensmittelprodukt mittels zumindest einer Aufschneidevorrichtung (12), insbesondere Hochgeschwindigkeits-Slicer, abgetrennte Scheibe umfassen, in einem System gemäß einem der vorstehenden Ansprüche, bei dem die Portionen mittels einer Mehrzahl individuell bewegbarer Transportmover bewegt werden, die mittels einer Steuereinrichtung in einem Bahnsystem (10) entlang wenigstens einer vorgegebenen Bahn zu zumindest einer Verpackungsvorrichtung (14, 15) bewegt, insbesondere verteilt und/oder einer Bahn zugeordnet, und dort verpackt werden,
wobei die Transportmover jeweils zumindest einen mit dem Bahnsystem (10) zusammenwirkenden Läufer und wenigstens einen am Läufer angebrachten Träger für Portionen umfassen, insbesondere wobei zumindest ein Transportmover mehrmals an der Aufschneidevorrichtung (12) vorbeibewegt wird, um die Portion in einem vorgegebenen Format anzuordnen, insbesondere mit zueinander versetzten Scheiben, und/oder um nacheinander Teilportionen aufzunehmen und zu einer Gesamtportion zu kombinieren, bevorzugt wobei der Transportmover nacheinander in unterschiedlichen Bahnen an der Aufschneidevorrichtung (12) vorbeibewegt wird und/oder dass ein Einleger (28) der Aufschneidevorrichtung (12) relativ zur Bahn verstellt wird.

## Claims

1. A system comprising
at least one slicing apparatus (12), in particular a high-speed slicer, for slicing food products;
a conveying apparatus for moving portions which each comprise at least one slice cut off from a food product; and
at least one packaging apparatus (14, 15) for packaging the portions, wherein the conveying apparatus comprises a plurality of individually movable transport movers for the transport of portions;
a path system (10) for the transport movers in which the transport movers are movable in a direction of transport along at least one predefined path; and
a control device for controlling the movements of the transport movers in the path system (10),
wherein the transport movers each comprise at least one rotor cooperating with the path system (10) and at least one carrier for portions attached to the rotor;
wherein the conveying apparatus is configured for moving the portions from the slicing apparatus (12) to the packaging apparatus (14, 15), **characterized in that**
the path system (10) comprises at least one passing line (30) which bridges a path section which leads to a slicing apparatus (12) and/or to a packaging apparatus (14, 15).

2. A system according to claim 1,
**characterized in that**
exactly one slicing apparatus (12) and a plurality of packaging apparatus (14, 15) are provided.

3. A system according to claim 1 or 2,
**characterized in that**
the performance of the slicing apparatus (12) is greater than the performance of a packaging apparatus (14, 15), with the performance corresponding to the number of portions which can be generated or packaged per unit of time.

4. A system according to any one of the preceding claims,
**characterized in that**
at least two packaging apparatus (14, 15) differ from one another and are in particular configured as deep-draw packagers (14) or as tray packagers (15).

5. A system according to any one of the preceding claims,
**characterized in that**
the path system (10) comprises a buffer (20) configured for receiving at least one transport mover for each packaging apparatus (14, 15), with the buffer (20) in particular comprising at least one path section or a plurality of parallel path sections of the path system (10); or
**in that** the path system (10) comprises a buffer (20) configured for receiving at least one transport mover for at least one packaging apparatus (14, 15) and does not comprise a buffer for at least one packaging apparatus (14, 15), with the buffer (20) in particular comprising at least one path section or a plurality of parallel path sections of the path system (10).

6. A system according to any one of the preceding claims,
**characterized in that**
the control device controls the transport movers such that uniform portions are packaged by at least one packaging apparatus (14, 15) and mixed portions (24) of a combination of part portions, in particular of different sorts and/or of different shapes, are packaged using at least one packaging apparatus (14, 15), with the transport movers preferably being grouped in a predefined order for generating the mixed portions (24) before the reaching of a packaging apparatus (14, 15), in particular with all the part portions respectively originating from a buffer (20) and/or in particular with at least one part portion originating from a buffer (20); and **in that** at least one part portion does not originate from a buffer (20) and is in particular conveyed on a direct route from the slicing apparatus (12) to the packaging apparatus (14, 15).

7. A system according to any one of the preceding claims,
**characterized in that**
at least one transport mover having a part portion is branched off from a path section which leads to a first packaging device (14, 15), in particular to generate a mixed portion (24) with or before a further packaging device (14, 15).

8. A system according to any one of the preceding claims,
**characterized in that**
the control device controls the transport movers such that, in dependence on a criterion, they are not moved directly to a slicing apparatus (12) at least temporarily and/or are moved to a packaging apparatus (14, 15), with the criterion in particular depending on the performance and/or on the kind of the slicing apparatus (12) and/or of the packaging apparatus (14, 15), on the product, on the portion, on a format formed by a plurality of arranged portions and/or on a predefinable operating state.

9. A system according to claim 1,
**characterized in that**
a plurality of slicing apparatus (12) and exactly one packaging apparatus (14, 15) are provided, in particular with the control device controlling the transport movers such that, in dependence on a criterion, they are not moved directly to a slicing apparatus (12) at least temporarily, with the criterion in particular depending on the performance and/or on the kind of the slicing apparatus (12) and/or of the packaging apparatus (14, 15), on the product, on the portion, on a format formed by a plurality of arranged portions and/or on a predefinable operating state; and/or
**in that** exactly one slicing apparatus (12) and exactly one packaging apparatus (14, 15) are provided, in particular with the path system (10) comprising at least one set of distribution points (16) which splits at least one track coming from the slicing apparatus (12) into a plurality of functional tracks (18).

10. A system according to claim 9,
**characterized in that**
each functional track (18) comprises a buffer (20) configured for receiving at least one transport mover or is configured as a buffer (20); or
**in that** at least one functional track (18) comprises a buffer (20) configured for receiving at least one transport mover or is configured as a buffer (20), with at least one functional track (18) not comprising a buffer and not being configured as a buffer; and/or
**in that** a plurality of functional tracks (18) are configured for the transport, for the processing, for the combining and/or for the buffering of portions or part portions of different sorts.

11. A system according to any one of the preceding claims,
**characterized in that**
the path system (10) comprises at least one return transport line (27) which branches off from a path section which leads from a slicing apparatus (12) to a packaging apparatus (14, 15); and opens into the path section again upstream, in particular with the return transport line (27) being configured to supply a transport mover to the slicing apparatus (12) again; to channel a transport mover for the part covering of the path system onto the path section; and/or to channel a transport mover having slicing residues or faulty portions, in particular incomplete or incorrectly positioned portions, out of the path section.

12. A system according to any one of the preceding claims,
**characterized in that**
a robot device (32) is provided for transferring portions from the conveying apparatus to the packaging apparatus (14, 15), with a robot device (32) in particular being provided for every packaging apparatus (14, 15).

13. A system according to any one of the preceding claims,
**characterized in that**
the path system (10) has at least one unloading path (33) which leads through an unloading region in which at least one packaging apparatus (14, 15) is arranged, in particular a plurality of packaging apparatus (14, 15) next to one another, in particular with the unloading path (33) extending at least section-wise in parallel with a transfer region of a packaging apparatus (14, 15) and in particular leading closely past the packaging apparatus (14, 15).

14. A system according to claim 13,
**characterized in that**
the unloading path (33) leads through the unloading region multiple times and in particular describes a 180° curve after passing through the unloading region in a first unloading line and leads through the unloading region again in a second unloading line, preferably at least on a part line in parallel with the first unloading line;
and/or **in that**,
with a plurality of unloading paths (33), all the unloading paths lead through all the transfer regions of the packaging apparatus (14, 15); or
**in that**, with a plurality of unloading paths (33), at least one unloading path (33) leads through a plurality of transfer regions of the packaging apparatus (14, 15), in particular all of them, and at least one unloading path (33) does not lead through at least one transfer region of a packaging apparatus (14, 15).

15. A method of moving portions which each comprise at least one slice cut off from a food product by means of at least one slicing apparatus (12), in particular a high-speed slicer, in a system according to any one of the preceding claims,
in which the portions are moved by means of a plurality of individually movable transport movers which are moved to at least one packaging apparatus (14, 15), in particular distributed and/or associated with a path and packaged there, along at least one predefined path by means of a control device in a path system (10),
wherein the transport movers each comprise at least one rotor cooperating with the path system (10) and at least one carrier for portions attached to the rotor, in particular wherein at least one transport mover is moved past the slicing apparatus (12) multiple times to arrange the portion in a predefined format, in particular with mutually offset slices, and/or to receive part portions after one another and to combine them to form a total portion, preferably wherein the transport movers are moved past the slicing apparatus (12) consecutively in different paths; and/or in that a feed (28) of the slicing apparatus (12) is adjusted relative to the path.

## Revendications

1. Système comprenant
au moins un dispositif de tranchage (12), en particulier une trancheuse à grande vitesse, pour trancher des produits alimentaires, un dispositif de transport pour déplacer des portions qui incluent chacune au moins une tranche séparée d'un produit alimentaire, et
au moins un dispositif d'emballage (14, 15) pour emballer les portions, le dispositif de transport comprenant
une pluralité de chariots de transport mobiles individuellement pour transporter des portions,
un système de voie (10) pour les chariots de transport, dans lequel les chariots de transport peuvent être déplacés dans une direction de transport le long d'au moins une voie prédéterminée, et
un moyen de commande pour commander les mouvements des chariots de transport dans le système de voie (10),
les chariots de transport comprenant chacun au moins un curseur coopérant avec le système de voie (10) et au moins un support pour des portions monté sur le curseur, et
le dispositif de transport étant réalisé pour déplacer les portions depuis le dispositif de tranchage (12) vers le dispositif d'emballage (14, 15), **caractérisé en ce que**
le système de voie (10) comprend au moins un trajet de contournement (30) qui enjambe un tronçon de voie menant vers un dispositif de tranchage (12) et/ou vers un dispositif d'emballage (14, 15).

2. Système selon la revendication 1,
**caractérisé en ce que**
il est prévu précisément un dispositif de tranchage (12) et plusieurs dispositifs d'emballage (14, 15).

3. Système selon la revendication 1 ou 2,
**caractérisé en ce que**
la performance du dispositif de tranchage (12) est supérieure à la performance d'un dispositif d'emballage (14, 15), la performance correspondant au nombre de portions susceptibles d'être produites ou emballées par unité de temps.

4. Système selon l'une des revendications précédentes,
**caractérisé en ce que**
au moins deux dispositifs d'emballage (14, 15) sont différents l'un de l'autre et sont en particulier réalisés sous forme de moyens d'emballage par thermoformage (14) ou de moyens d'emballage en barquette (15).

5. Système selon l'une des revendications précédentes,
**caractérisé en ce que**
pour chaque dispositif d'emballage (14, 15), le système de voie (10) est pourvu d'un tampon (20) réalisé pour recevoir au moins un chariot de transport, en particulier, le tampon (20) comprenant au moins un tronçon de voie ou plusieurs tronçons de voie parallèles du système de voie (10), ou pour au moins un dispositif d'emballage (14, 15), le système de voie (10) est pourvu d'un tampon (20) réalisé pour recevoir au moins un chariot de transport, et au moins pour un dispositif d'emballage (14, 15), ledit système est dépourvu de tampon, le tampon (20) comprenant au moins un tronçon de voie ou plusieurs tronçons de voie parallèles du système de voie (10).

6. Système selon l'une des revendications précédentes,
**caractérisé en ce que**
le moyen de commande contrôle les chariots de transport de telle sorte que des portions uniformes sont emballées avec au moins un dispositif d'emballage (14, 15) et que des portions mixtes (24), composées d'une combinaison de portions partielles, en particulier de différentes sortes et/ou de différentes formes, sont emballées avec au moins un dispositif d'emballage (14, 15), les chariots de transport étant de préférence regroupés dans un ordre prédéfini pour produire les portions mixtes (24), avant d'atteindre un dispositif d'emballage (14, 15), en particulier, toutes les portions partielles proviennent d'un tampon respectif (20), et/ou en particulier, au moins une portion partielle provient d'un tampon (20) et au moins une portion partielle ne provient pas d'un tampon (20) et est en particulier transportée directement du dispositif de tranchage (12) au dispositif d'emballage (14, 15).

7. Système selon l'une des revendications précédentes,
**caractérisé en ce que**
au moins un chariot de transport avec une portion partielle est dévié hors d'un tronçon de voie menant vers un premier dispositif d'emballage (14, 15), en particulier pour produire une portion mixte (24) avec ou en avant d'un autre dispositif d'emballage (14, 15).

8. Système selon l'une des revendications précédentes,
**caractérisé en ce que**
le moyen de commande contrôle les chariots de transport de telle sorte qu'en fonction d'un critère, ceux-ci ne sont au moins temporairement pas déplacés directement vers un dispositif de tranchage (12) et/ou vers un dispositif d'emballage (14, 15), en particulier le critère dépendant de la performance et/ou du type du dispositif de tranchage (12) et/ou du dispositif d'emballage (14, 15), du produit, de la portion, d'un format formé par plusieurs portions disposées et/ou d'un état de fonctionnement prédéfinissable.

9. Système selon la revendication 1,
**caractérisé en ce que**
il est prévu plusieurs dispositifs de tranchage (12) et précisément un dispositif d'emballage (14, 15), et, en particulier
le moyen de commande contrôle les chariots de transport de telle sorte qu'en fonction d'un critère, ceux-ci ne sont au moins temporairement pas déplacés directement vers un dispositif de tranchage (12), en particulier le critère dépendant de la performance et/ou du type du dispositif de tranchage (12) et/ou du dispositif d'emballage (14, 15), du produit, de la portion, d'un format formé par plusieurs portions disposées et/ou d'un état de fonctionnement prédéfinissable, et/ou
**en ce qu'**il est prévu précisément un dispositif de tranchage (12) et précisément un dispositif d'emballage (14, 15), en particulier le système de voie (10) comprenant au moins un aiguillage de répartition (16) qui subdivise au moins une piste provenant du dispositif de tranchage (12) en plusieurs pistes fonctionnelles (18).

10. Système selon la revendication 9,
**caractérisé en ce que**
chaque piste fonctionnelle (18) est pourvue d'un tampon (20), réalisé pour recevoir au moins un chariot de transport, ou est réalisée sous forme de tampon (20), ou
**en ce qu'**au moins une piste fonctionnelle (18) est pourvue d'un tampon (20), réalisé pour recevoir au moins un chariot de transport, ou est réalisée sous forme de tampon (20),
au moins une piste fonctionnelle (18) étant dépourvue de tampon et n'étant pas réalisée sous forme de tampon, et/ou
**en ce que** plusieurs pistes fonctionnelles (18) sont réalisées pour transporter, traiter, combiner et/ou tamponner des portions ou des portions partielles de différentes sortes.

11. Système selon l'une des revendications précédentes,
**caractérisé en ce que**
le système de voie (10) comprend au moins un trajet de transport retour (27) qui bifurque d'un tronçon de voie menant depuis un dispositif de tranchage (12) vers un dispositif d'emballage (14, 15) et qui, en amont, rejoint de nouveau ledit tronçon de voie, en particulier le trajet de transport retour (27) étant réalisé pour ramener un chariot de transport au dispositif de tranchage (12), pour introduire un chariot de transport sur le tronçon de voie pour couvrir partiellement le système de voie, et/ou pour extraire un chariot de transport, muni de chutes de tranchage ou de portions imparfaites, en particulier incomplètes ou mal positionnées, hors du tronçon de voie.

12. Système selon l'une des revendications précédentes,
**caractérisé en ce que**
pour transférer des portions du dispositif de transport au dispositif d'emballage (14, 15), il est prévu un ensemble robot (32), en particulier, un ensemble robot (32) étant prévu pour chaque dispositif d'emballage (14, 15).

13. Système selon l'une des revendications précédentes,
**caractérisé en ce que**
le système de voie (10) présente au moins une voie de déchargement (33) qui traverse une zone de déchargement dans laquelle est disposé au moins un dispositif d'emballage (14, 15), en particulier plusieurs dispositifs d'emballage (14, 15) les uns à côté des autres, et, en particulier, la voie de déchargement (33) s'étend au moins localement parallèlement à une zone de transfert d'un dispositif d'emballage (14, 15) et passe en particulier à proximité du dispositif d'emballage (14, 15).

14. Système selon la revendication 13,
**caractérisé en ce que**
la voie de déchargement (33) traverse plusieurs fois la zone de déchargement et, en particulier après avoir traversé la zone de déchargement, décrit une ligne courbe de 180° dans un premier trajet de déchargement, et traverse à nouveau la zone de déchargement dans un deuxième trajet de déchargement, de préférence au moins sur un trajet partiel parallèle au premier trajet de déchargement, et/ou **en ce que**
dans le cas de plusieurs voies de déchargement (33), toutes les voies de déchargement traversent toutes les zones de transfert des dispositifs d'emballage (14, 15), ou
dans le cas de plusieurs voies de déchargement (33), au moins une voie de déchargement (33) traverse plusieurs, en particulier toutes les zones de transfert des dispositifs d'emballage (14, 15), et au moins une voie de déchargement (33) ne traverse pas au moins une zone de transfert d'un dispositif d'emballage (14, 15).

15. Procédé pour déplacer des portions qui incluent chacune au moins une tranche séparée d'un produit alimentaire au moyen d'au moins un dispositif de tranchage (12), en particulier au moyen d'une trancheuse à grande vitesse, dans un système selon l'une des revendications précédentes, dans lequel
les portions sont déplacées au moyen d'une pluralité de chariots de transport mobiles individuellement, qui sont déplacées à l'aide d'un moyen de commande dans un système de voie (10) le long d'au moins une voie prédéterminée vers au moins un dispositif d'emballage (14, 15), en étant en particulier réparties et/ou associées à une voie, et y sont emballées, les chariots de transport comprennent chacun au moins un curseur coopérant avec le système de voie (10) et au moins un support pour des portions monté sur le curseur, en particulier
au moins un chariot de transport est déplacé plusieurs fois devant le dispositif de tranchage (12), afin de disposer la portion selon un format prédéfini, en particulier avec des tranches décalées les unes par rapport aux autres, et/ou afin de prendre successivement des portions partielles et de les combiner en une portion totale, en particulier
le chariot de transport est déplacé devant le dispositif de tranchage (12) successivement dans différentes voies, et/ou
un moyen d'insertion (28) du dispositif de tranchage (12) est déplacé par rapport à la voie.
